# EUROPÄISCHE PATENTSCHRIFT

(11) **EP 2 653 304 B1**
(45) Veröffentlichungstag und Bekanntmachung des Hinweises auf die Patenterteilung: **15.08.2018**
(21) Anmeldenummer: 13163682.1
(22) Anmeldetag: 15.04.2013
(51) Int. Cl.: B32B 7/06, B32B 27/32, B32B 27/36, B32B 3/26, G09F 3/10

(54) **LAMINATMATERIAL ZUM AUSSTATTEN VON PRODUKTEN**
LAMINATE MATERIAL FOR THE LABELLING OF PRODUCTS
MATÉRIAU LAMINÉ POUR L'ÉQUIPEMENT DE PRODUITS

(30) Priorität: 16.04.2012 DE 102012103266; 23.05.2012 DE 102012104459; 02.07.2012 DE 102012105841; 10.12.2012 DE 102012111998
(43) Veröffentlichungstag der Anmeldung: 23.10.2013
(73) Patentinhaber: Linhardt GmbH & Co. KG, 94234 Viechtach (DE)
(72) Erfinder: Seidl, Joachim, 83564 Soyen (DE)
(74) Vertreter: Glück Kritzenberger Patentanwälte PartGmbB

(56) Entgegenhaltungen:
- EP-A2- 2 282 303
- US-A- 5 194 324

## Beschreibung

Die Erfindung bezieht sich auf ein Laminatmaterial gemäß Oberbegriff Patentanspruch 1.

Ein Verfahren und Anlagen zum Ausstatten von Produkten in Form von Packmitteln sind bekannt. Bei bekannten Verfahren wird für die Ausstattung von Packmitteln ein Laminatmaterial verwendet, welches in der Anlage selbst erzeugt wird. Das Laminatmaterial weist auf einem bahnförmigen Flach-oder Trägermaterial Einzellaminate auf, die über einen Trennlack oder Schälkleber am Trägermaterial gehalten sind und unter Verwendung eines Kleberauftrags aus einem aushärtbaren Zweikomponentenkleber an das jeweilige Packmittel übergeben und mit diesem durch Anrollen verbunden werden, und zwar unter zunehmendem Abziehen des jeweiligen Einzellaminats von dem Trägermaterial. Hierfür sind der verwendete Zweikomponentenkleber und der Trennlack bzw. Schälkleber so gewählt, dass die Haftwirkung zwischen dem Einzellaminat und dem Trägermaterial kleiner ist als die Haftwirkung zwischen dem Einzellaminat und dem Packmittel.

Das Laminatmaterial wird bei dem bekannten Verfahren so hergestellt, dass eine mit dem Trägermaterial über den Trennlack bzw. Schälkleber verbundene dünne Folie aus Kunststoff zunächst an ihrer Trägermaterial abgewandten Seite bedruckt (Hinterdruck) und dann mit dem Kleberauftrag aus einem Zweikomponentenkleber versehen. Nach einer Vortrocknung des Kleberauftrags werden dieser und die Folie gestanzt oder geschnitten, und zwar in der Weise, dass hierbei durch erste quer zur Längsrichtung des Trägermaterials verlaufende Schnittlinien sowie durch zweite parallel zu einer Längsachse des Trägermaterials verlaufende Schnittlinien die Einzellaminate bzw. deren Ränder gebildet. Im Anschluss daran wird der die Einzellaminate nicht bildende Folienrest (Matrix) abgezogen, sodass sich dann auf dem Trägermaterial nur noch die Einzellaminate befinden, die voneinander beabstandet und jeweils von einem den Kleberauftrag nicht aufweisenden Teil, d.h. von einem kleberfreien Teil des Trägermaterials umgeben sind. Damit sind beim Aufbringen der Einzellaminate auf die Packmittel, d.h. beim Laminieren der Packmittel störende mit Kleber behaftete und an die Einzellaminate angrenzende Bereiche des Trägermaterials vermieden. Nachteilig ist hierbei insbesondere, dass der vor dem Aufbringen der Einzellaminate auf die Packmittel abzuziehende Folienrest (Matrix) eine leiterartige Struktur aufweist, und zwar mit zwei Längsstegen und einer Vielzahl von Querstegen. Insbesondere durch die Querstege ist ein sicheres und störungsfreies Abziehen des Folienrestes vom Trägermaterial nicht gewährleistet. Dies gilt insbesondere bei sehr dünnen Folien. Weiterhin ist das Entsorgen des leiter- oder matrixartigen und mit dem Zweikomponentenkleber versehenen Folienrestes durch Aufwickeln in einer vernünftigen Weise nicht möglich.

Aus der US 5,194,324 ist ein opakes Etikettenmaterial mit einer Mehrschichtstruktur bekannt. Die Mehrschichtstruktur umfasst eine Kernschicht aus einer eine Schicht aus Hohlräumen aufweisenden Matrix aus einem orientierten thermoplastischen Polymer. Die Mehrschichtstruktur umfasst außerdem eine erste, stark glänzende Hautschicht aus Polyethylen mittlerer Dichte, die an einer ersten Oberfläche der Kernschicht haftet, eine zweite thermoplastische Polymerhautschicht, die an einer zweiten Oberfläche der Kernschicht haftet, und einen Kleber auf der Oberfläche der thermoplastischen Hautschicht. Aus EP 2 282 303 A2 sind dünne Folien in einem Etikett bekannt. Es offenbart eine Trägerschicht mit einer Dicke von 20 bis 100 µm sowie eine Klebemassenabdeckschicht von 7 bis 10 µm.

Aufgabe der vorliegenden Erfindung ist es, ein Laminatmaterial aufzuzeigen, welches die Nachteile des Standes der Technik vermeidet. Zur Lösung dieser Aufgabe ist ein Laminatmaterial entsprechend dem Patentanspruch 1 ausgebildet.

Bei dem erfindungsgemäßen Laminatmaterial ist der Kleberauftrag von einem Schmelzkleber gebildet. Dies ermöglicht es, u.a., das Laminatmaterial in einem Betrieb zu fertigen, der auf die Herstellung von Etikettenmaterial bzw. Laminatmaterial spezialisiert ist, insbesondere auch auf das Bedrucken und Beschichten von Laminatmaterial mit Schmelz- oder Heißkleber. Das Laminatmaterial mit dem "trocknen" Kleberauftrag wird dann im verwendungsfertigen Zustand an den Verarbeiter dieses Materials für das Ausstatten bzw. Laminieren von Produkten, z.B. Packmitteln geliefert. Damit entfällt beim Verarbeiter die Kleberbeschichtung, das Trocknen des Klebers, das Ausstanzen und das Abziehen sowie Aufwickeln der Matrix.

Bei einer Ausführungsform schließen sämtliche Einzellaminate jeweils an einer ersten, quer bzw. senkrecht zur Längsrichtung des Trägermaterials verlaufende Trennlinie unmittelbar aneinander an. Bei einer weiteren Ausführungsform der Erfindung bilden die Einzellaminate jeweils Gruppen von wenigstens zwei, bevorzugt von mehr als zwei Einzellaminaten, die über eine erste Trennlinie unmittelbar aneinander anschließen, wobei zwischen den Gruppen jeweils Zwischenlaminate vorgesehen sind.

Bei der Herstellung des Laminatmaterials bildet der Schmelz- oder Heißkleberauftrag, der auf die die Einzellaminate bildende Folie erfolgt, eine zusätzliche Verstärkung dieser Folie. Hierdurch ist es grundsätzlich ohne die Gefahr eines Reißens auch einer sehr dünnen Folie möglich, den Kleberauftrag und die Folie zur Erzeugung der mit dem Kleberauftrag versehenen Einzellaminate so zu stanzen und/oder zu schneiden, dass
sich ein leiterartiger Folienrest ergibt. Dieser kann dann noch beim Hersteller des Laminatmaterials vom Trägermaterial abgezogen werden, sodass die mit dem Kleberauftrag versehenen Einzellaminate in Längsrichtung des Trägermaterials voneinander beabstandet sind. Die Gefahr eines Reißens der Folie beim Abziehen des leiterartigen Folienrestes besteht durch den die Folie verstärkenden, erkalteten Heiß- oder Schmelzkleberauftrag nicht.

"Einzellaminate" sind im Sinne der Erfindung jeweils die beim Schneiden oder Stanzen durch die ersten und zweiten Trennlinien erzeugte Teile der Folie, mit denen die Packmittel laminiert werden.

"Laminiermaterial" bedeutet in sinne der Erfindung das zumindest aus dem Trägermaterial und den Einzellaminaten bestehenden und für das Laminieren der Packmittel verwendete bahnförmige Material mit dem Klebstoffauftrag und nach dem Abziehen der streifenförmigen Folienreste.

"Ausgangsmaterial" ist im Sinne der Erfindung das bahnförmige, zumindest aus dem Trägermaterial und den Einzellaminaten bestehende Material vor dem Abziehen der streifenförmigen Folienreste.

Der Ausdruck "im Wesentlichen" bedeutet im Sinne der Erfindung Abweichungen von jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 in schematischer Funktionsdarstellung eine Anlage zum Aufbringen von Einzellaminaten aus einer dünnen transparenten und hinterdruckten Folie oder Laminatfolie auf Produkte mit rotationssymmetrischer Mantelfläche und dabei auf Produkte in Form von Packmitteln unter Verwendung eines Laminiermaterial;
Fig. 2 in vereinfachter Darstellung und in Draufsicht eine Teillänge des Ausgangsmaterials;
Fig. 3 in vereinfachter Darstellung und in Draufsicht eine Teillänge des Laminiermaterials;
Fig. 4 in vereinfachter Darstellung und in Draufsicht eine Teillänge des Ausgangsmaterials mit den beiden abzuziehenden Folienstreifen;
Fig. 5 in vereinfachter Darstellung und in Draufsicht eine Teillänge des Trägermaterials nach dem Laminieren;
Fig. 6 in schematischer Darstellung das Aufwickeln des Folienrestes bzw. der Folienstreifen;
Fig. 7 - 14 jeweils in schematischer Darstellung Details der Laminiervorrichtung des zweiten Anlagenteils in verschiedenen Betriebszuständen;
Fig. 15 in vereinfachter Darstellung und in Draufsicht eine Teillänge des Laminiermaterials, bei einer weiteren Ausführungsform der Erfindung mit Zwischenlaminat;
Fig. 16 in vereinfachter Darstellung und in Draufsicht eine Teillänge des Trägermaterials bei Ausführungsform der Erfindung gemäß Figur 15;
Fig. 17 in schematischer Darstellung Details der Laminiervorrichtung des zweiten Anlagenteils bei Verwendung des Laminatmaterials der Figur 15;
Fig. 18 in schematischer Funktionsdarstellung eine Anlage zum Aufbringen von Einzellaminaten aus einer dünnen transparenten und hinterdruckten Folie oder Laminatfolie auf Packmittel unter Verwendung eines Laminiermaterial, bei einer Weiteren Ausführungsform der Erfindung;
Fig. 19 zeigt in schematischer Funktionsdarstellung eine weitere Ausführungsform einer Anlage zum Aufbringen von Einzellaminaten aus einer dünnen, transparenten und hinterdruckten Folie oder Laminatfolie auf die rotationssymmetrische bzw. kreiszylinderförmige Außen- oder Mantelfläche von Produkten in Form von Stiften unter Verwendung eines Laminatmaterials;
Fig. 20 in schematischer Darstellung Details der Laminiervorrichtung des zweiten Anlagenteils der Anlage der Figur 19;
Fig. 21 und 22 jeweils in schematischer Funktionsdarstellung eine Anlage zum Aufbringen von Einzellaminaten aus einer dünnen, transparenten und hinterdruckten Folie oder Laminatfolie auf die rotationssymmetrische bzw. kreiszylinderförmige Außen- oder Mantelfläche von Produkten, z.B. in Form von Packmitteln oder Stiften;
Fig. 23 - 27 weitere Ausführungsformen einer Anlage zum Ausstatten von Produkten durch Aufbringen von Einzellaminaten gemäß der Erfindung sowie die Laminiereinheiten dieser Anlage und deren Funktionselemente;
Fig. 28 in einer Darstellung ähnlich Figur 3 eine Teillänge des Laminatmaterials mit zwei sich in Laminatmateriallängsrichtung erstreckenden Reihen von Einzellaminaten.

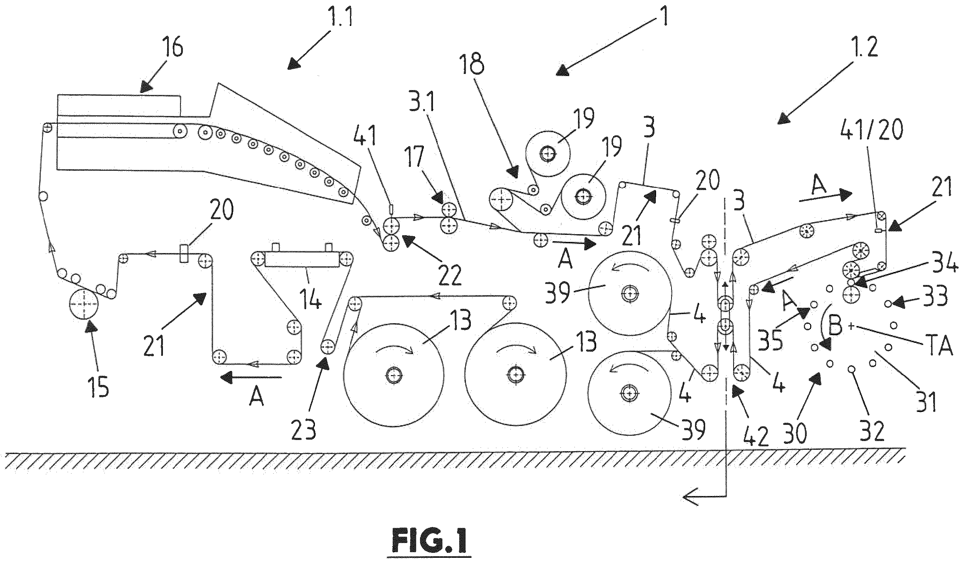

Die in der Figur 1 allgemein mit 1 bezeichnete Anlage dient zum Laminieren von Packmitteln 2, beispielsweise von Tuben oder deren Tubenkörper, aus solchen aus Metall und/oder Kunststoff mit Einzellaminaten 5.1 aus einer dünnen Folie an einer kreiszylinderförmigen Umfangsfläche.

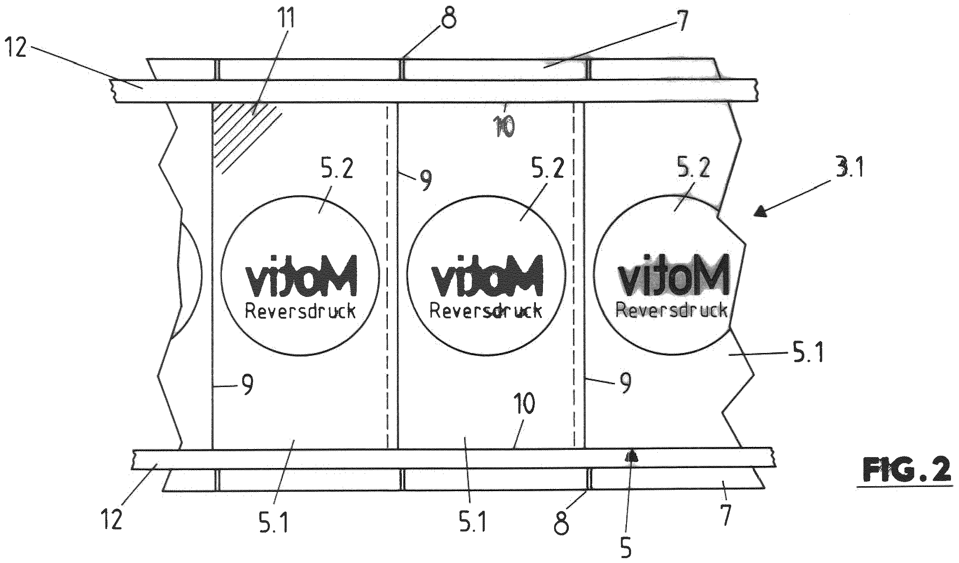

Die Anlage 1 besteht bei der dargestellten Ausführungsform aus zwei Anlagenteilen 1.1 und 1.2, von denen der Anlagenteil 1.1 zum Bereitstellen des zum Laminieren der Packmittel 2 verwendeten Laminatmaterials 3 dient, welches entsprechend der Figur 2 im Wesentlichen aus einem bahnförmigen Trägermaterial 4 aus einem Flachmaterial, z.B. aus Karton oder einem festen und auch hitzebeständigen Material und aus den in Längsrichtung des Trägermaterials 4 unmittelbar aneinander anschließenden, aber voneinander getrennten Einzellaminaten 5.1 besteht, die aus einer dünnen Folie 5 erzeugt und durch eine Schicht 6 aus einem Trennlack oder Schälkleber an dem Trägermaterial 4 gehalten sind. Die Folie 5 bzw. die von dieser gebildeten Einzellaminate 5.1 bestehen beispielsweise PE oder PT oder PET und besitzen eine Dicke im Bereich zwischen 2 und 5 µm.

An seinen beiden Längsrändern ist das Trägermaterial 4 jeweils mit einem Randstreifen 7 versehen, der entweder ebenfalls von der dünnen, durch die Schicht 6 gehaltenen Folie 5 oder aber durch über die Einzellaminate 5.1 vorstehende Randbereiche des Trägermaterials 4 gebildet sind. Der Randstreifen 7 ist bei der dargestellten Ausführungsform mit Markierungen 8 versehen, die eine exakte Zuordnung zu den Einzellaminaten 5.1 bzw. deren Aufdruck 5.2 (Hinterdruck) aufweisen und die in der nachstehend noch näher beschriebenen Weise zur Steuerung des Laminierens der Packmittel 2 dienen.

Generell erfolgt dieses Laminieren der Packmittel 2 mit der Anlage 1 in der Weise, dass zunächst ein Ausgangsmaterial 3.1 bereit gestellt wird, welches aus dem Trägermaterial 4 und der mit dem Aufdruck 5.2 versehenen Folie 5 besteht. Auf die dem Trägermaterial 4 abgewandte und mit dem Aufdruck 5.2 versehene Seite der Folie 5 erfolgt dann ein Kleberauftrag 11 in Form eines Heiß- oder Schmelzklebers auf Kunststoffbasis. Im Anschluss daran werden aus der Folie 5 durch Stanzen und/oder Schneide die Einzellaminate 5.1 erzeugt, und zwar durch die Ränder der Einzellaminate 5.1 bildende Trennlinien 9 und 10. Die ersten Trennlinien 9 verlaufen senkrecht zur Längserstreckung des bahnförmigen Trägermaterials 4 und trennen die Einzellaminate 5.1 voneinander. Die beiden zweiten Trennlinien 10 erstrecken sich jeweils in Längsrichtung des Trägermaterials 4 mit Abstand von dem jeweiligen äußeren Randstreifen 7 und sind durchgehend ausgeführt, d.h. sie erstrecken sich unterbrechungsfrei über die gesamte Länge des Trägermaterials 4 bzw. des für das Laminieren genutzten Laminiermaterials 3. Die Trennlinien 10 erzeugen jeweils einen durchgehenden, d.h. nicht unterbrochenen Folienstreifens 12 zwischen den Einzellaminaten 5.1 und dem äußeren Randstreifen 7.

Vor dem Laminieren der Packmittel 2 werden die beiden Folienstreifen 12 zur Bildung des Laminiermaterials 3 abgezogen, sodass die mit dem Kleberauftrag versehenen Einzellaminate 5.1 von den beiden Randstreifen 7 durch einen kleberfreien streifenförmigen Bereich 12.1 beabstandet sind, was u.a. für eine saubere Arbeitsweise beim anschließenden Aufbringen bzw. Laminieren der Einzellaminate 5.1 auf die Packmittel 2 von Bedeutung ist. Die Breite der Folienstreifen und damit die Breite der kleberfreien streifenförmigen Bereiche 12.1 betragen beispielsweise 10mm.

Das so im Anlagenteil 1.1 erzeugte und mit dem Kleberauftrag 12 versehene Laminatmaterial 3 wird dann dem Anlagenteil 1.2 zugeführt, in welchem die Einzellaminate 5.1 in der nachstehend noch näher beschriebenen Weise von dem Trägermaterial 4 abgenommen und durch Anrollen auf das jeweilige Packmittel 2 aufgebracht werden, sodass dann der Aufdruck 5.2 durch die Einzellaminat 5.1 hindurch an der Außenseite des mit dieser Folie 5 ausgestatteten Packmittels 2 optisch sichtbar ist.

### Anlagenteil 1.1

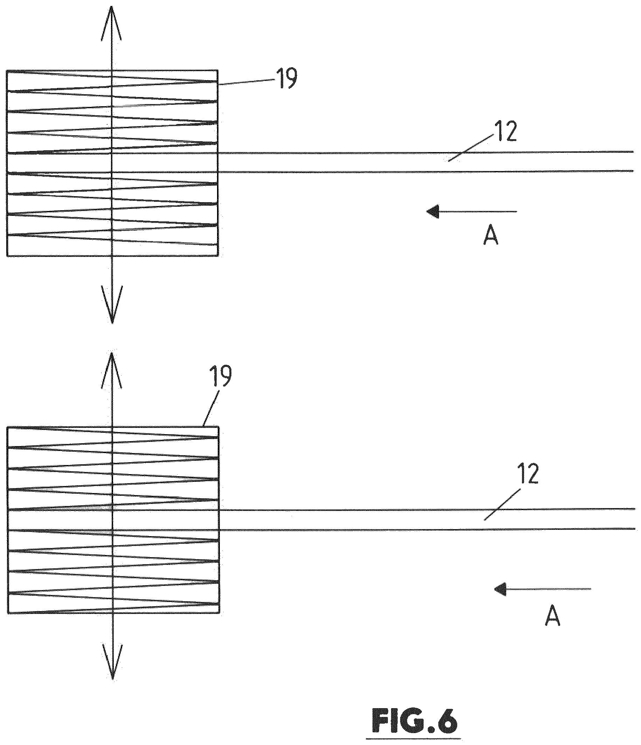

Das Ausgangsmaterial 3.1 wird als Vorrat bzw. Vorratsrolle 13 bereitgestellt. Um einen kontinuierlichen unterbrechungsfreien Betrieb zu gewährleisten, sind zwei derartige Vorratsrollen 13 vorgesehen, von denen eine genutzt und die zweite jeweils als Reserve bereitsteht. Das Ausgangsmaterial 3.1 wird von der jeweils genutzten Vorratsrolle 13 in Richtung des Pfeils A abgezogen und durchläuft zunächst eine Spleißvorrichtung 14, in der das Ende einer verbrauchten Vorratsrolle 13 mit dem Anfang der als Reserve bereitstehenden Vorratsrolle 13 z.B. automatisch verbunden wird. Nach der Spleißvorrichtung 14 gelangt das Ausgangsmaterial 3.1 an eine Station 15, in der der Kleberauftrag 11 erfolgt, und zwar ausschließlich auf den von der Folie 5 abgedeckten Bereich des Ausgangsmaterials 3.1, d.h. auf den Bereich, der später zumindest die Folienstreifen 12 sowie die Einzellaminate 5.1 bildet. In einer weiteren Station 16 erfolgen dann ein Vortrocknen des Kleberauftrags 11 und gegebenenfalls ein anschließendes Abkühlen des Ausgangsmaterials 3.1, so dass sich der Kleber des Kleberauftrags 11 in einem getrockneten Zustand befindet. Das mit dem Kleberauftrag 11 versehende Ausgangsmaterial 3.1 durchläuft dann eine Stanzeinheit 17, in der unter Verwendung von wenigstens einem, beispielsweise rotierenden Stanzwerkzeug die Schnitte oder Trennlinien 9 und 10 lediglich im Kleberauftrag 11 sowie in der Folie 5 erzeugt werden. Im Anschluss daran werden die Folienstreifen 12 zum Erzeugen der kleberfreien Randbereiche 12.1 abgezogen und zu Wicklungen oder Wickelkörper 19 aufgewickelt. Dieses Aufwickeln erfolgt entsprechend der Figur 6 vorzugsweise in einem Kreuzwickelverfahren, sodass stabile walzenartige Wickelkörper 19 mit einer axialen Länge erhalten werden, die wesentlich größer ist als die Breite der abgezogenen Folienstreifen 12. Nach dem Abziehen der Folienstreifen 12 steht das mit dem Kleberauftrag versehene Laminatmaterial 3 zur Verfügung.

Der ordnungsgemäße Transport des Ausgangsmaterials 3.1 sowie auch des nach dem Abziehen der Folienstreifen 12 erhaltenen Laminatmaterials 3 wird innerhalb des Anlagenteils 1.1 durch mehrere Sensoren überwacht, u.a. mit Sensoren 20 für eine erste und zweite Einrichtung 21 für die Kantensteuerung des Ausgangsmaterials 3.1 und des Laminatmaterials 3 sowie auch eine Einrichtung 22 zur Erzeugung des Bahntransportes bzw. zum Abziehen des Ausgangsmaterials 3.1 von der Vorratsrolle 13 und eine Einrichtung 23 zur Regulierung der Bahnspannung vorgesehen.

### Anlagenteil 1.2

Zum Aufbringen der Einzellaminate 5.1 auf die Packmittel 2 weist das Anlagenteil 1.2 als zentrales Element eine Laminierstation 30 auf, die bei der dargestellten Ausführungsform u.a. einen um eine Trägerachse TA, beispielsweise um eine horizontale Achse schrittweise und gesteuert in Richtung des Pfeils B drehbaren Träger 31 aufweist, der an seinem Umfang mit einer Vielzahl von Packmittelaufnahmen in Form von Dornen 32 versehen ist. Die Dorne 32, die mit ihren Achsen jeweils parallel zu einander und zur Achse TA orientiert sind, stehen über eine gemeinsame Seite des beispielsweise kreisscheibenförmigen Trägers 31 vor und sind jeweils an einem Ende an diesem Träger 31 um ihre Dornachse frei drehbar gelagert. Die Dorne 32 sind weiterhin gleichmäßigen Winkelabständen und in demselben radialen Abstand von der Achse TA um diese Achse verteilt vorgesehen.

Die mit den Einzellaminaten 5.1 zu versehenen oder zu laminierenden Packmittel 2 werden an einer Aufgabeposition 33 auf jeweils einen dort bereitstehenden Dorn 32 aufgesetzt, gelangen dann auf diesem Dorn 32 gehalten mit der getakteten Drehbewegung des Trägers 31 an eine Übergabe-und Anrollposition 34, an der das jeweilige Einzellaminat 5.1 an das betreffende am Dorn 32 gehaltene Packmittel 2 übergeben bzw. mit einem vorauseilenden Bereich an die Umfangsfläche des Packmittels 2 angedrückt wird, sodass das Einzellaminat dann durch den Kleberauftrag 11 am Packmittel 2 haftet und an der Übergabe- und Anrollposition 34 durch Drehen des Dornes 32 und des Packmittels 2 um die Dornachse an das Packmittel abgerollt und dabei zugleich zunehmend von dem Trägermaterial 4 abgezogen wird. Das so mit dem Einzellaminat 5.1 versehene bzw. laminierte Packmittel 2 gelangt dann durch getaktete Drehbewegung des Trägers 31 an eine Abnahmeposition 35, an der das Packmittel von dem Dorn 32 abgenommen wird.

Bei der dargestellten Ausführungsform weist die Laminiereinheit 30 an der Übergabe-und Anrollposition 34 u.a. eine als Anpress- und Stützwalze dienende Walze 36 sowie eine als Anpress- und Laminierwalze dienende Walze 37 auf. Die Walze 36 ist frei drehbar oder durch einen gesteuerten Antrieb um eine Stützwalzenachse STA umlaufend antreibbar, und zwar für eine Vorwärtsdrehbewegung entsprechend dem Pfeil C und für eine Rückwärtsdrehbewegung entsprechend dem Pfeil C'. Die Walze 37 ist durch einen gesteuerten Antrieb um eine Laminierwalzenachse LA umlaufend antreibbar, und zwar für eine Vorwärtsdrehbewegung bzw. für den Transport des Laminatmaterials 3 in Transportrichtung A entsprechend dem Pfeil D und für eine Rückwärtsdrehbewegung entsprechend dem Pfeil D'.

Die beiden Achsen STA und LA sind parallel zueinander und parallel zu der Achse TA orientiert und befinden sich in einer gemeinsamen Ebene E, in der auch die Achse TA angeordnet ist. Weiterhin befindet sich die Walze 36 innerhalb der Bewegungsbahn der Dorne 32 bzw. der auf diesen angeordneten Packmittel 2. Die Walze 37 befindet sich außerhalb der Bewegungsbahn der Dorne 32 bzw. der auf diesen angeordneten Packmittel 2. Beide Walzen 36 und 37 sind durch gesteuerte Stellantriebe um einen kleinen Hub H, beispielsweise um einen Hub H in der Größenordnung von 1mm - 3mm gesteuert radial zu ihren Achsen STA bzw. LA und damit auch radial zu der Achse TA bewegbar, und zwar jeweils zwischen einer Ausgangsposition, in der die betreffende Walze von dem an der Übergabeposition 34 befindlichen Packmittel 2 beabstandet ist, und einer Zustellposition in der die betreffende Walze gegen das Packmittel 2 unmittelbar (Walze 36) oder mittelbar über das Laminatmaterial 3 anliegt (Walze 37). Die Walzen 36 und 37 sind jeweils an ihrer Walzenumfangsfläche mit einer elastischen und vorzugsweise nicht haftenden Beschichtung versehen, beispielsweise mit einer Beschichtung oder Auflage aus Silikongummi.

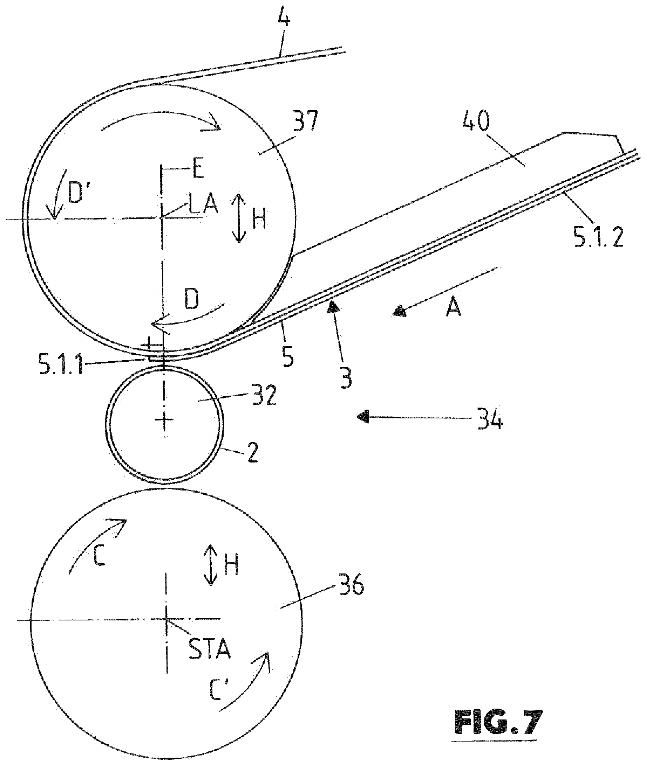

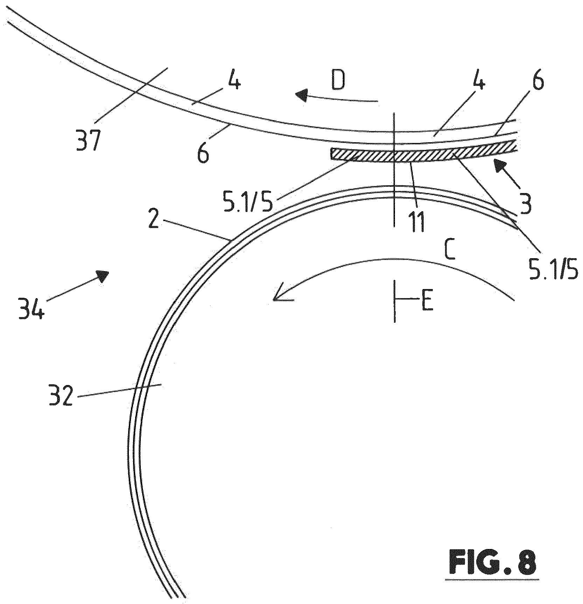

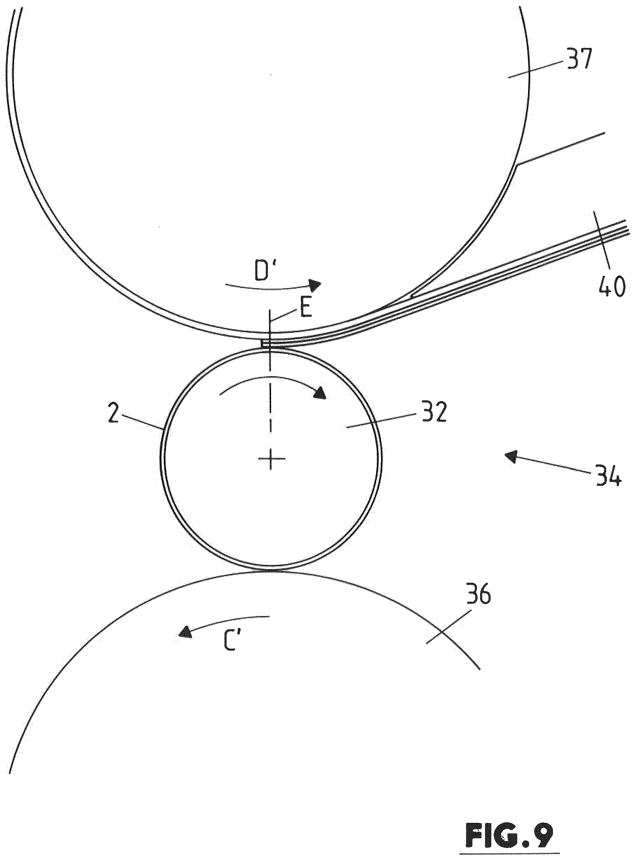

Die Figuren 7 und 8 zeigen den Zustand der Laminiereinheit 30 kurz vor der Übergabe eines Einzellaminats 5.1 an ein Packmittel 2. Das Laminatmaterial 3 ist hierfür über die Anpress- und Laminierwalze 37 derart geführt, dass sich das zu übertragende Einzellaminat 5.1 mit dem Bereich seines in Transportrichtung A vorauseilenden Endes 5.1.1 dem Packmittel 2 gegenüberliegt, dieses durch eine Trennlinie 9 erzeugte Ende 5.1.1 aber in Transportrichtung A bereits über die Ebene E vorsteht, beispielsweise um einen Betrag von 2mm - 6mm. In diesem Zustand werden die Drehbewegung der Walze 37 und damit der Transport des Laminatmaterials 3 gestoppt (Figuren 7 und 8). Im Anschluss daran erfolgen entsprechend der Figur 9 das Zustellen der Walzen 36 und 37 gegen das Packmittel 2 und damit das Andrücken der Einzellaminat 5.1 gegen das Packmittel 2. Bei weiter zugestellten Walzen 36 und 37 erfolgt zunächst eine Rückwärtsdrehbewegung beider Walzen 36 und 37 um einen kurzen Winkelbetrag in Richtung der Pfeile C' bzw. D', sodass das Einzellaminat 5.1 auch mit seinem tatsächlichen, durch die Trennlinie 9 erzeugten und beim Laminieren vorauseilenden Ende 5.1.1 gegen das Packmittel 2 angepresst wird. Im Anschluss daran erfolgt durch Drehen der weiterhin zugestellten Walzen 36 und 37 in ihrer Vorwärtsdrehrichtung C bzw. D das vollständige Anrollen der betreffenden Einzellaminat 5.1. Hierbei wird der Anfang des Einzellaminats 5.1 zweimal an das Packmittel 2 angepresst. Durch das zweimalige Anpressen wird die Haftung des Einzellaminats 5.1 am Packmittel 2 verbessert, so dass es sich beim weiteren Anrollen einwandfrei von dem Trägermaterial 4 löst.

Die Abmessung, die die Einzellaminate 5.1 auf dem Laminatmaterial 3 in Bahnlängsrichtung aufweisen, kann beispielsweise so auf den Durchmesser bzw. Umfang der Packmittel 2 abgestellt sein, dass das von einer Trennlinie 9 gebildete Ende 5.1.1 und das von einer weiteren Trennlinie 9 gebildete Ende 5.1.2 des auf das Packmittel 2 aufgebrachten Einzellaminats 5.1 einander unmittelbar benachbart sind, d.h. beispielsweise ohne Abstand oder im Wesentlichen ohne Abstand aneinander anschließen. Dies ist aber in der Regel nicht erreichbar und schränkt darüber hinaus auch die Möglichkeiten der Gestaltung von Packmitteln 2 und deren Ausstattung stark ein, zumal die Breite, die die Einzellaminate 5.1 in Längsrichtung des Laminatmaterials 3 aufweisen (Abstand zweier Trennlinien 9), auch von den drucktechnischen Möglichkeiten und den vorgegebenen technischen Daten der für das Bedrucken der Folien 5 verwendeten Druckeinrichtung abhängig ist, zumal für die Einzellaminate 5.1 in der Regel ein vollflächiger Aufdruck 5.2 erwünscht ist. Aus diesem Grunde ist es zweckmäßig, die Einzellaminat 5.1 auf die Packmittel 2 so aufzubringen, dass sich die Enden 5.1.1 und 5.1.2 überlappen, d.h. eine Überlaminierung 38 bilden. In dieser können dann auch drucktechnisch bedingte, nicht vollständig bedruckte Randbereiche der Einzellaminate 5.1 optisch "versteckt" werden, sodass sich für das mit dem jeweiligen Einzellaminat 5.1 versehende Packmittel 2 zumindest optisch eine nicht unterbrochene Rundum-Ausstattung ergibt. Ein gewisses Problem besteht nämlich bei den im Laminatmaterial 3 unmittelbar an den Trennlinien 9 aneinander anschließenden Einzellaminaten 5.1 auch darin, dass es drucktechnisch bedingt nicht oder aber nicht in jedem Fall möglich ist, diese Einzellaminate über ihre gesamte in Laufrichtung des Laminatmaterials 3 orientierte Breite vollflächig zu bedrucken. Vielmehr wird aus drucktechnischen Gründen an den Enden 5.1.1 und 5.1.2 zumindest ein sehr schmaler nicht bedruckter Rand verbleiben.

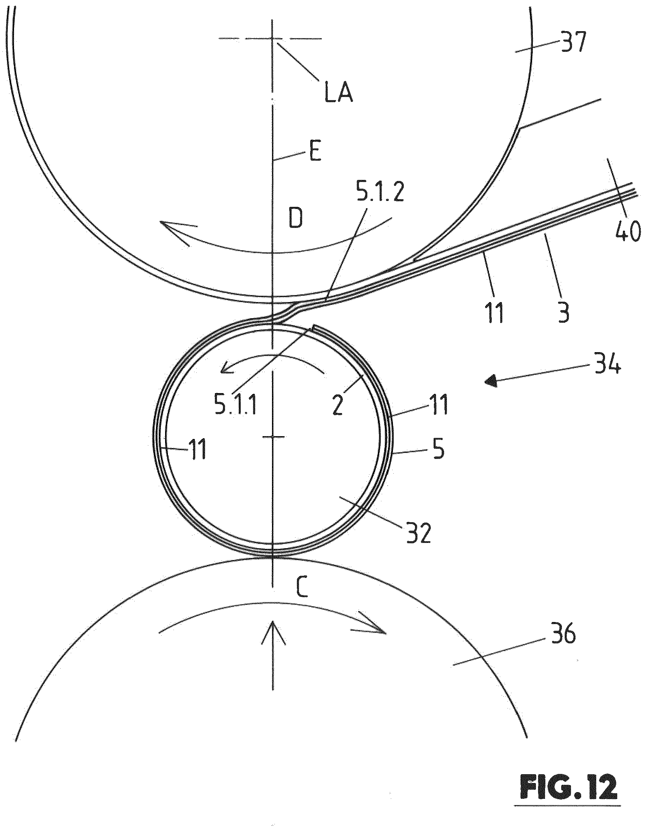

Entsprechend der Figur 12 wird die Walze 37 kurz vor dem vollständigen Anrollen des Einzellaminates 5.1 in ihre Ausgangsstellung bewegt, um zu vermeiden, dass das nächste Einzellaminat 5.1 mit angeklebt wird. Der noch nicht angepresste Rest des Einzellaminates 5.1 wird bei weiterhin drehendem Packmittel 2 von dem Trägermaterial 4 abgezogen und legt sich dann zunächst lose gegen das Packmittel 2 an. Die Walze 36 befindet sich weiterhin in ihrer Anpressstellung, sodass beim Passieren dieser Walze auch der zunächst nicht angepresste Rest bzw. das nacheilende Ende 5.1.2 des Einzellaminates 5.1 gegen das Packmittel 2 unter Ausbildung der Überlaminierung 38 angepresst wird. Bereits während des Anrollens des nacheilenden Endes 5.1.2 eines Einzellaminates 5.1 wird durch die Vorschubbewegung des Laminatmaterials 3 das nächst Einzellaminat 5.1 in die Übergabeposition 34 bewegt. Bevorzugt ist die Walze 37 und/oder 36 beheizt, beispielsweise elektrisch oder durch Heißluft oder Thermoöl.

Das Trägermaterial 4 ohne die Einzellaminate 5.1, aber mit dem Randstreifen 7 wird innerhalb des Anlagenteils 1.1 aufgewickelt, wie dies mit den Rollen 39 dargestellt ist. Um die Wirkung des Kleberauftrages 11, d.h. das Haften der Einzellaminate 5.1 an den Packmitteln zu verbessern und/oder um das Abbinden des Klebers zu beschleunigten ist in Transportrichtung A des Laminatmaterials 3 vor der Übergabe- und Anrollstation 34 eine Heizeinrichtung 40 vorgesehen, mit der das Laminatmaterial 3 erwärmt, beispielsweise auf ca. 120°C erwärmt und dadurch in einen zumindest zähflüssigen Zustand unmittelbar vor dem Laminieren versetzt wird.

Es versteht sich, dass die Steuerung der Laminiereinrichtung 30 bzw. der Drehbewegung sowie der Zustellbewegung der Walzen 36 und 37 und dabei insbesondere auch der Transport des Laminatmaterials 3 an die Übergabe- und Anrollstation 34 unter Verwendung der Markierungen 8 erfolgt, die mittels Sensoren 41 abgetastet werden und vorzugsweise zusammen mit dem Aufdruck 5.2 erzeugt wurden. Auch die Steuerung der Stanz- und Schneideinheit erfolgt mit wenigstens einem die Markierungen 8 abtastenden Sensor 41.

Innerhalb des Anlagenteils 1.1 erfolgt bei der dargestellten Ausführungsform eine kontinuierliche Bewegung des Ausgangsmaterials 3.1 bzw. des Laminatmaterials 3. Innerhalb des Anlagenteils 1.2 erfolgt bedingt durch die Arbeitsweise der Laminiereinrichtung 30 eine getaktete Bewegung des Laminatmaterials 3 und des Trägermaterials 4. Zur Anpassung dieser Bewegungen ist am Übergang zwischen den Anlageteilen 1.1 und 1.2 eine Vorschubausgleichseinheit 42 für das Laminatmaterial 3 und das Trägermaterial 4 vorgesehen.

Das Anlagenteil 1.1 ist bevorzugt ein eigenständiger Betrieb, z.B. Druckereibetrieb, der auf die Herstellung von Etikettenmaterial und/oder des Laminatmaterials 3 spezialisiert ist und der dieses Material an den die Laminiereinheit 30 betreibenden Verarbeiter liefert.

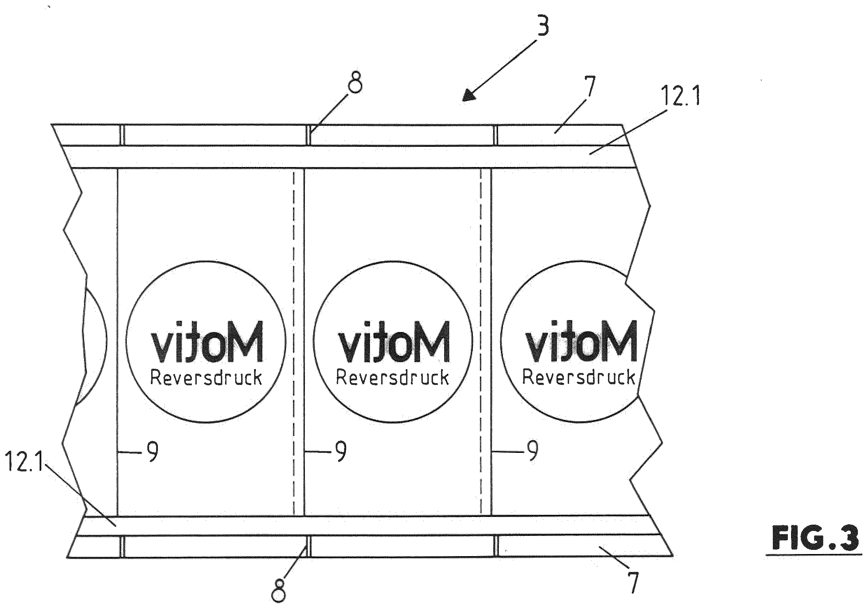

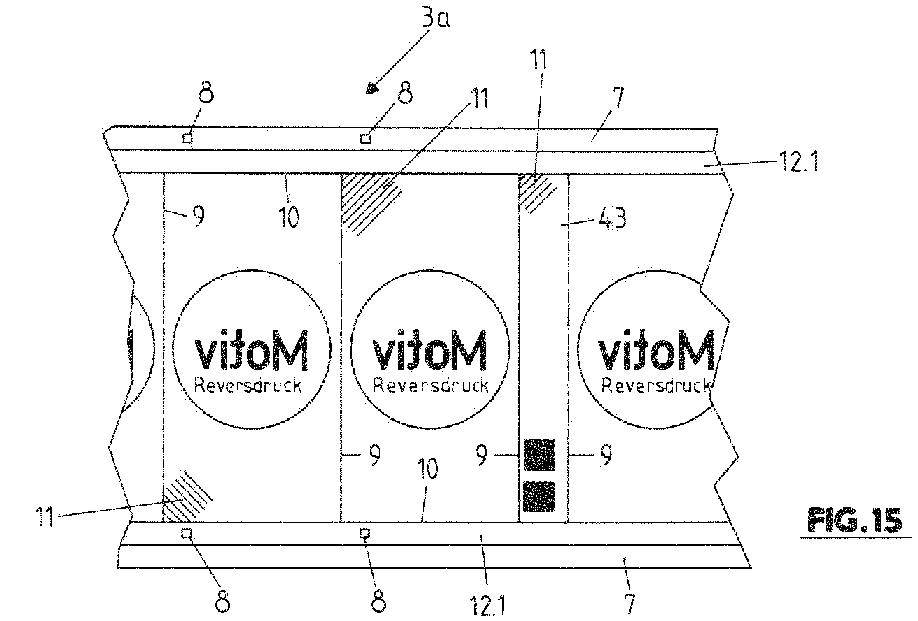

Vorstehend wurde davon ausgegangen, dass sämtliche Einzellaminate 5.1 im Laminatmaterial 3 unmittelbar aneinander anschließen und lediglich durch die Trennlinie 9 voneinander getrennt sind. Die Figur 15 zeigt in einer Darstellung ähnlich Figur 3 ein bereits mit dem Leimauftrag 12 versehenes Laminatmaterial 3a, bei dem die Einzellaminate 5.1 Gruppen bilden, die jeweils aus wenigstens zwei Einzellaminaten 5.1, bevorzugt aber aus mehr als zwei Einzellaminaten 5.1, beispielsweise aus sechs Einzellaminaten 5.1 bestehen, wobei zwischen den Gruppen jeweils ein Zwischenlaminat 43 vorgesehen ist. Das Laminatmaterial 3a wird analog zum Laminatmaterial 3 im Anlagenteil 1.1 der Anlage 1 erzeugt, insbesondere auch die Einzellaminate 5.1 und die Zwischenlaminate 43 nach dem Kleberauftrag 12 durch Einbringen der Trennlinien 9 und 10 mittels der Stanzeinheit 17. Durch die Zwischenlaminate 43 wird u.a. die Gestaltungsfreiheit bei der Ausbildung und Ausstattung der Packmittel 2 wesentlich erhöht. So können beispielsweise bei vorgegebenem Durchmesser eines Druckzylinders einer Druckeinrichtung zum Aufbringen des Aufdrucks 5.2 die Größe der Druckformen der jeweils benötigten Breite (Abstand zweier Trennlinien 9) Einzellaminate 5.1 angepasst werden, wobei der durch die Druckformen am Druckzylinder der Druckeinrichtung nicht genutzte Bereich des Druckzylinders bzw. der durch diesen Bereich fehlender Druck in das jeweilige Zwischenlaminat 43 verlegt werden.

Die Stanzeinheit 17 bzw. deren Stanzzylinder sind dabei beispielsweise so ausgelegt, dass bei jeder vollen Umdrehung des Stanzzylinders ein Zwischenlaminat 43 erzeugt wird.

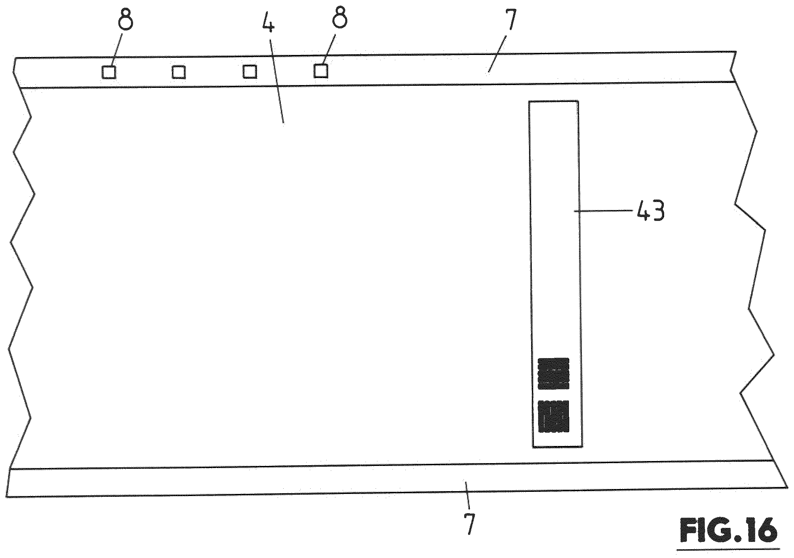

Das Aufbringen der Einzellaminate 5.1 auf die Packmittel 2 erfolgt mit dem Laminatmaterial 3a in gleicher Weise, wie dies vorstehend für das Laminatmaterial 3 beschrieben wurde, wobei aber die Steuerung des Vorschubs des Laminatmaterials 3a an der Übergabe- und Anrollposition 34 durch die gesteuerte Drehbewegung zumindest der Walze 37 und beispielsweise unter Berücksichtigung der Markierungen 8 derart erfolgt, dass die Zwischenlaminate 43 nicht an Packmittel 2 übergeben werden, sondern am Trägermaterial 4 verbleiben und zusammen mit diesem aufgewickelt werden (Figur 16).

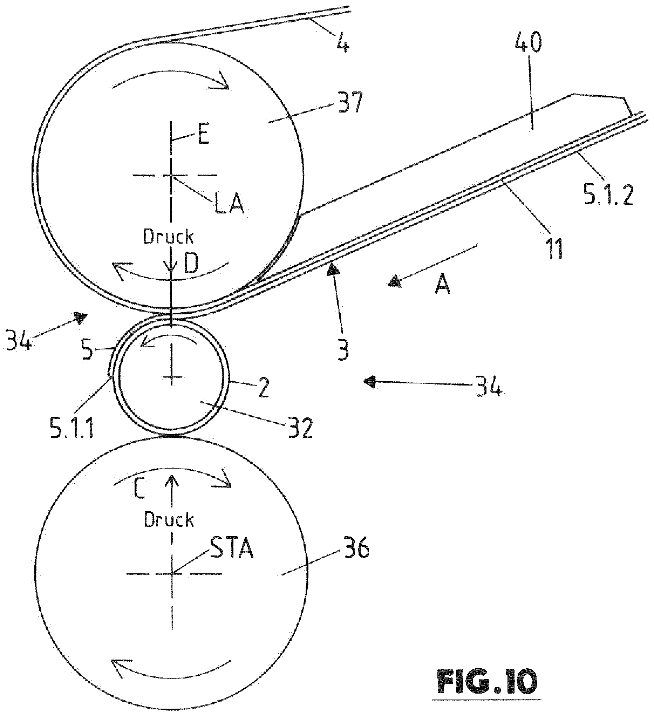

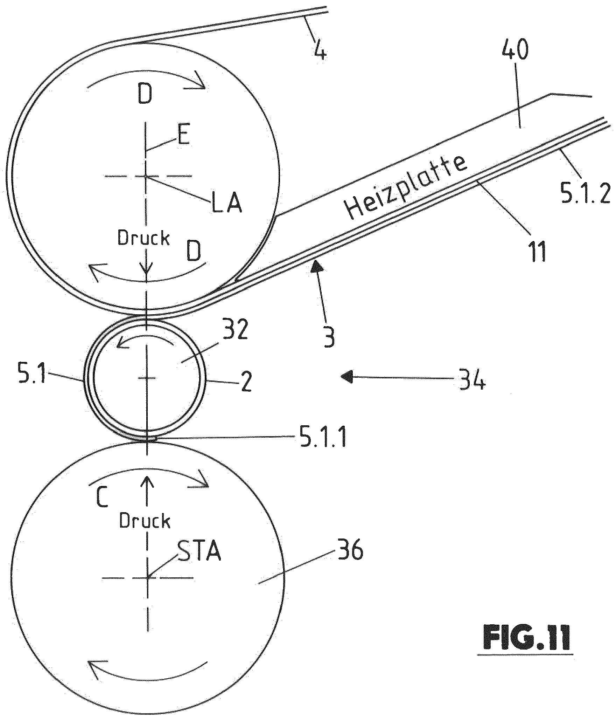

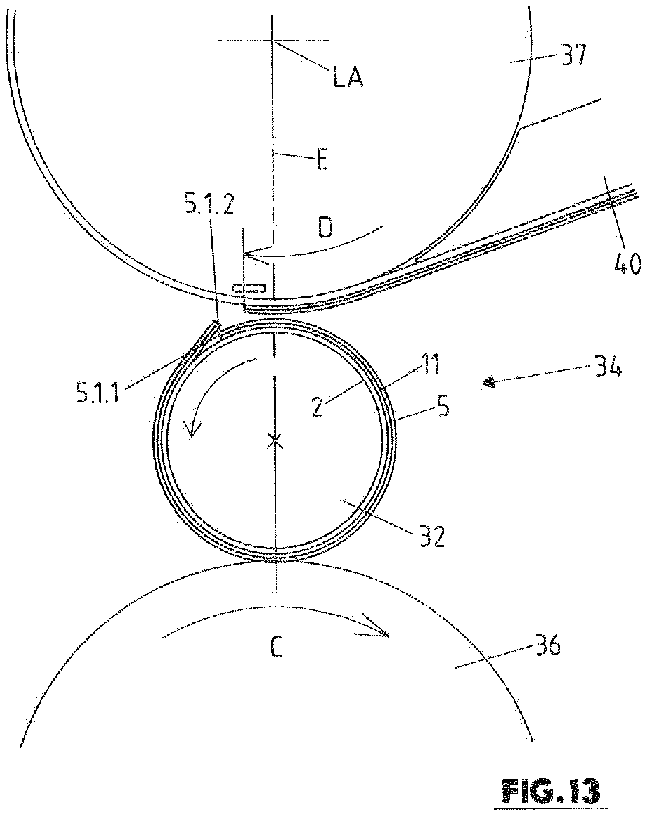

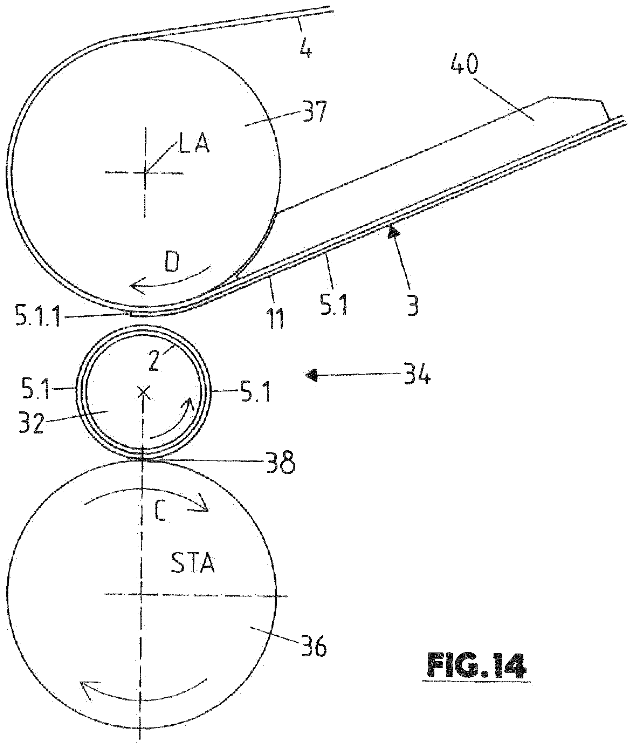

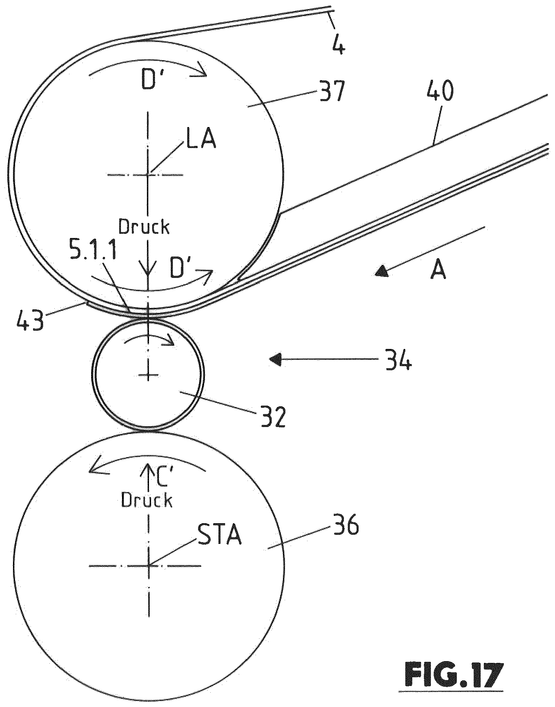

Das Übertragen und Aufbringen eines in Transportrichtung A des Laminatmaterials 3a auf ein Zwischenlaminat 43 folgenden Einzellaminats 5.1 erfolgt daher entsprechend den Figur 17 in der Weise, dass die Zustellung des Laminatmaterials 3a an der Übergabe- und Anrollposition 34 zunächst so erfolgt, dass sich das Zwischenlaminat 43 und das von der Trennlinie 9 gebildete fordere Ende 5.1.1 des Einzellaminats 5.1 in Transportrichtung A vor der Ebene E befinden und in diesem Zustand der Transport des Laminatmaterials 3a gestoppt und die beiden Walzen 36 und 37 zugestellt werden, sodass das mit dem Kleberauftrag 11 versehene Einzellaminat 5.1 an das Packmittel 2 angepresst wird. Im Anschluss daran erfolgt wiederum eine kurze Rückwärtsdrehbewegung der Walzen 36 und 37 (Pfeile C' und D') und damit eine kurze Rückbewegung des Laminatmaterials 3a, sodass nunmehr auch das fordere Ende 5.1.1 des Einzellaminats 5.1 gegen das Packmittel 2 angepresst ist. Im Anschluss daran erfolgt durch die Vorwärtsdrehbewegung der Walzen 36 und 37 (Pfeile C und D) das vollständige Abziehen des Einzellaminats 5.1 vom Trägermaterial 4 und Anrollen des Einzellaminats 5.1 an das Packmittel entsprechend den Figuren 10 - 14. Das Trägermaterial

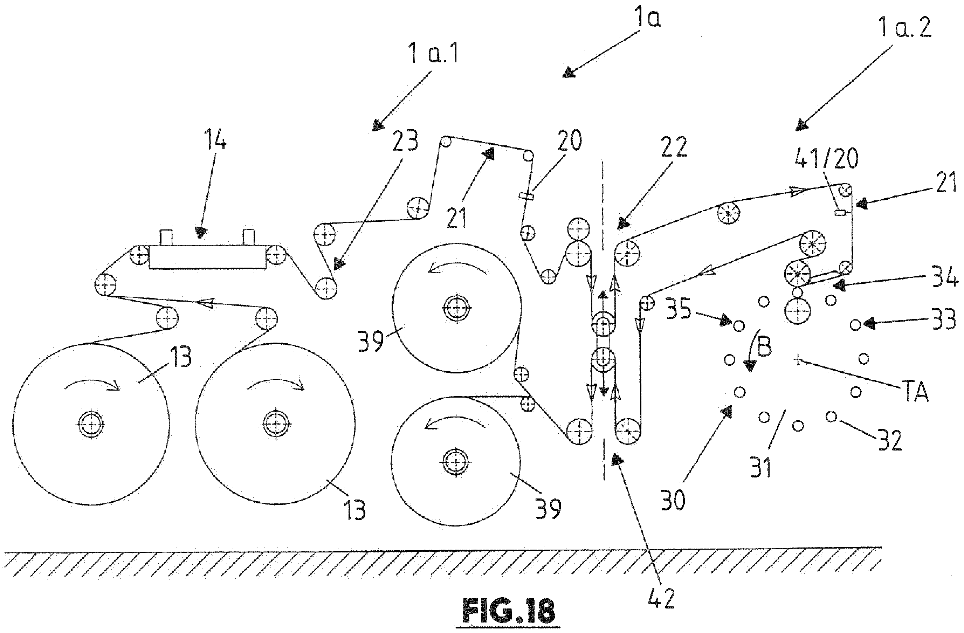

Die Figur 18 zeigt eine Anlage 1a, die wiederum aus dem Anlagenteil 1a.1 zum Bereitstellen des Laminatmaterials 3 oder 3a und aus dem, dem dem Anlagenteil 1.2 entsprechenden Anlagenteil 1a.2 zum Aufbringen der Einzellaminate 5 auf die Packmittel 2 unter Verwendung der Laminiereinheit 30 besteht. Die Anlage 1a unterscheidet sich von der Anlage 1 im Wesentlichen dadurch, dass das Laminatmaterial 3 oder 3a bereits im fertigen Zustand und mit einem von einem Schmelzkleber gebildeten Kleberauftrag 11 geliefert und auf den Rollen 13 bereitgestellt wird. Der Anlagenteil 1a.1 dient also im Wesentlichen nur zum Abziehen des Laminatmaterials 3 oder 3a von den Rollen 13, zur Steuerung und Überwachung des Transportes des Laminatmaterials 3 oder 3a, zum Zuführen dieses Laminatmaterials an den Anlagenteil 1a.2 sowie zum Aufwickeln des nicht mehr benötigten Trägermaterials 4 zu den Rollen bzw. Wicklungen 39 dient.

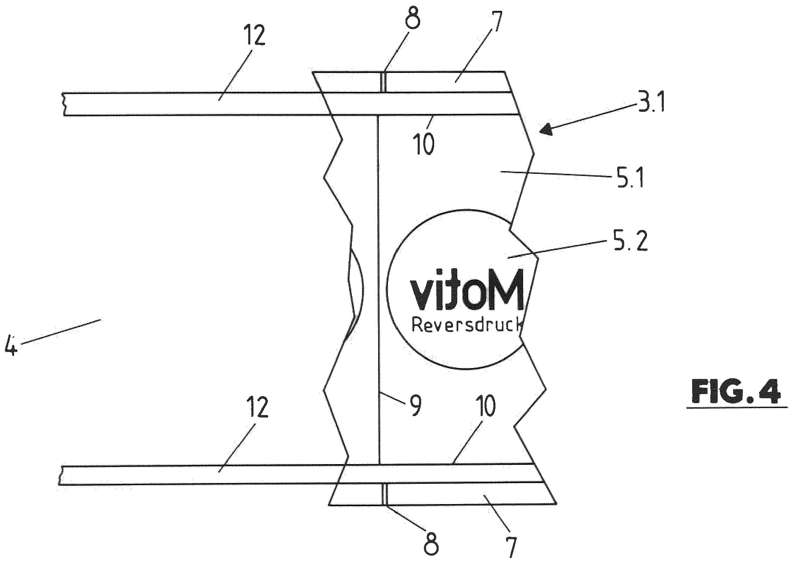

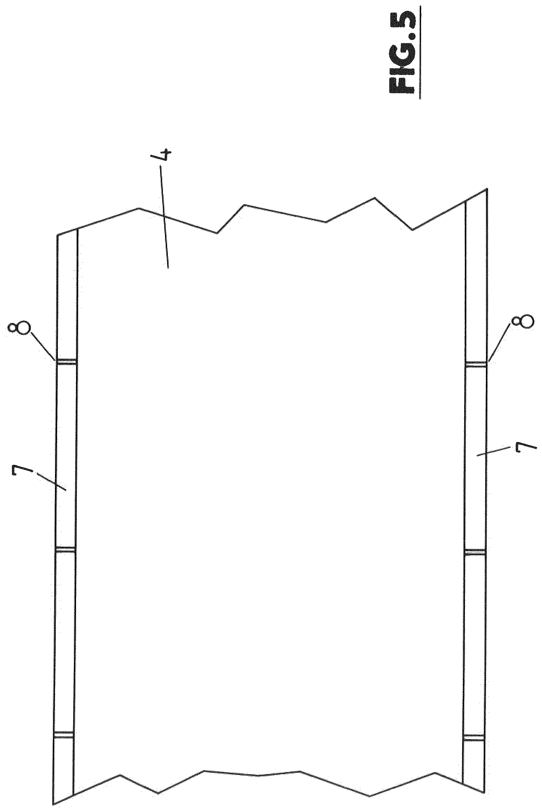

Das Laminatmaterial 3 oder 3a wird an die Anlage 1a von einer eigenständigen Laminier- und Druckanlage oder aber von einem außen stehenden Laminier- und Druckbetrieb geliefert. Die Verarbeitung des Laminatmaterials 3 oder 3a im Anlagenteil 1a.2 bzw. in der dortigen Laminiereinheit 30 erfolgt in gleicher Weise, wie dies vorstehend im Zusammenhang mit den Figuren 1 - 17 beschrieben wurde. Mit der Heizeinrichtung 40 wird der den Kleberauftrag 11 bildende Heiß- oder Schmelzkleber aktiviert, d.h. durch Hitzeeinwirkung in einen zumindest zähflüssigen Zustand versetzt wird, sodass mit diesem Kleber dann das Übertragen und anschließende Verbinden oder Laminieren des Einzellaminates 5.1 mit dem Packmittel 2durch Anrollen erreicht wird.

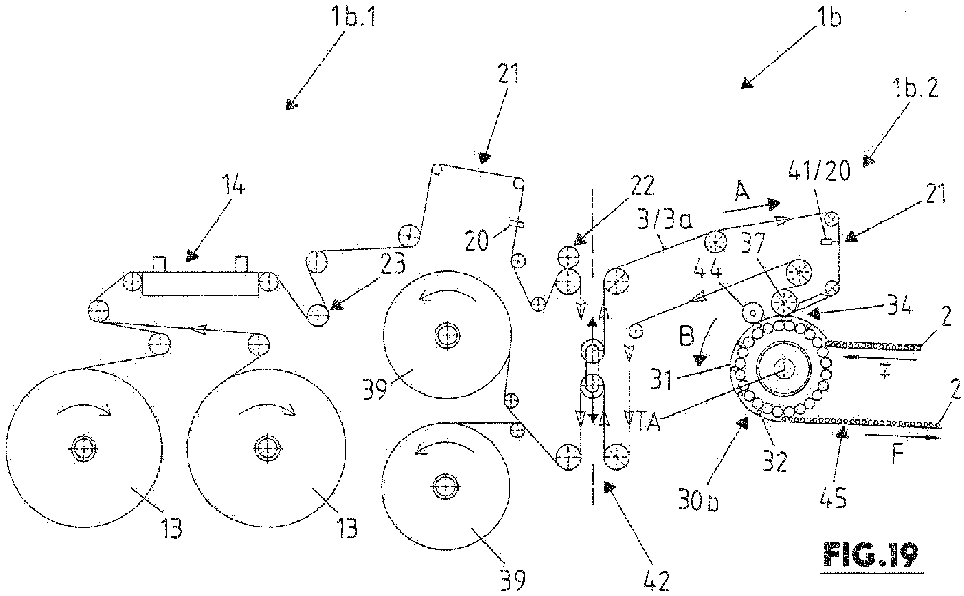

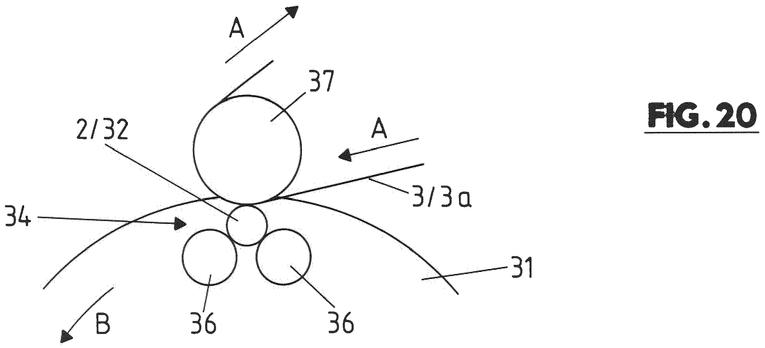

Die Figuren 19 und 20 zeigen als weitere Ausführungsform eine Anlage 1b zum Aufbringen von hinterdruckten Einzellaminaten 5.1 auf die rotationssymmetrischer bzw. zylindrischer Außenfläche von Produkten 2, z.B. in Form von Stiften, d.h. eine Anlage 1b zum Dekorieren derartiger Produkte. Die Anlage 1b fasst wiederum einen Anlageteil 1b.1 zum Bereitstellen des Laminatmaterials 3 bzw. 3a sowie einen Anlagenteil 1b, in welchem das eigentliche Laminieren der Produkte 2 erfolgt und welches hierfür die Laminiereinheit 30b aufweist.

Das Anlagenteil 1b.1 entspricht dem Anlagenteil 1a.1. Das Anlagenteil 1b.2 unterscheidet sich von dem Anlagenteil 1a.2 im Wesentlichen durch die Laminiereinheit 30. Diese weist an dem beispielsweise um eine horizontale Achse drehbaren Träger 31 in gleichmäßigen Winkelabständen um die Drehachse des Trägers 31 verteilt Produktaufnahmen für die Produkte 2 auf. Die Produktaufnahmen sind beispielsweise von kleinen Anpress- und/oder Stützwalzen gebildet. An dem Träger 31 sind bei der Laminiereinheit 30b jeder Aufnahme- oder Laminierposition 32 zwei Anpress- und Stützwalzen 36 zugeordnet, und zwar derart, dass diese in Drehrichtung B des Trägers 31 gegeneinander versetzt während des Laminierens das betreffende Produkt 2 abstützen. Die Achse jeder Laminierposition 32 beschreibt mit den Achsen der beiden zugehörigen Anpress- und Stützwalzen 36 ein Dreieck. Die Laminiereinheit 30b weist auch die Anpress- und Laminierwalze 37 und in Drehrichtung B des Trägers 31 auf die Übergabe- und Wickelposition 34 folgend eine zusätzliche Anpresswalze 44 auf, um die an das jeweilige Produkt 2a übergebene und dort durch Aufwickeln an der Übergabe- und Wickelposition am Produkt 2a fixierte Einzelfolie 5.1, insbesondere auch eine eventuelle Überlaminierung 38 dieser Einzelfolie fest gegen die Mantelfläche des Produktes 2a anzudrücken.
Der Träger 31 und der äußere Transporteur 45 sind wiederum getaktet bzw. schrittweise angetrieben, wobei in jeder Stillstandsphase der getakteten Bewegung die Übergabe und das vollständige oder nahezu vollständige Anrollen eines Einzellaminats 5.1 an ein Produkt 2 erfolgen.

Die zu laminierenden Produkte 2a werden der Laminiereinheit 30b bzw. deren Übergabe- und Wickelposition 34 über einen äußeren Transporteur 45 mit einer Transportrichtung F zugeführt. Die laminierten Produkte 2a werden über den äußeren Transporteur 45 wegtransportiert. Dieser äußere Transporteur 45 ist beispielsweise eine in der Transportrichtung F endlos umlaufende Transportkette mit entsprechenden Aufnahmen für die Produkte 2. Mit Hilfe eines nicht dargestellten Manipulators erfolgt der Transfer der Produkte 2 zwischen dem Transporteur 45 und den Aufnahmepositioen 32 am Träger 31.

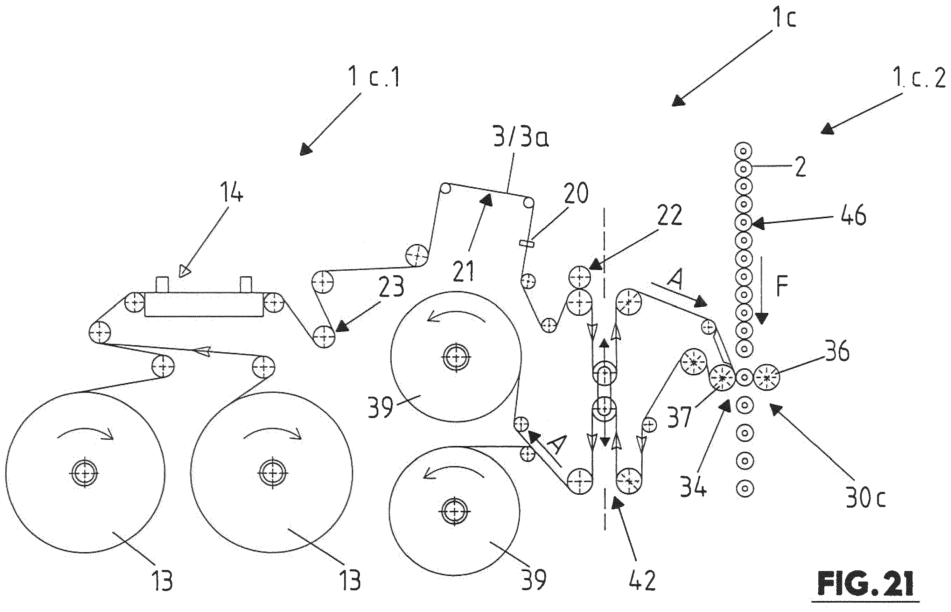

Die Figur 21 zeigt als weitere Ausführungsform eine Anlage 1c zum Aufbringen von hinterdruckten Einzellaminaten 5.1 auf die rotationssymmetrischer bzw. zylindrischer Außenfläche von Produkten 2, z.B. in Form von Packmitteln oder Stiften. Die Anlage 1c besteht wiederum aus den beiden Anlagenteilen 1c.1 und 1c.2, wobei das Anlagenteil 1c.1 dem Anlagenteil 1a.1 entspricht und sich das Anlagenteil 1c.2 von dem Anlagenteil 1a.2 im Wesentlichen nur durch die etwas unterschiedliche Ausgestaltung der Laminiereinheit 30c unterscheidet. Anstelle eines getaktet umlaufenden Trägers 31 weist die Laminiereinheit 30c einen Lineartransporteur 46 auf, mit dem die Produkte 2 getaktet an der Übergabe- und Wickelposition 34 der Laminiereinheit 30c vorbei bewegt werden, wobei in jeder Stillstandsphase der getakteten Bewegung die Übergabe und das vollständige oder nahezu vollständige Anrollen eines Einzellaminats 5.1 an ein Produkt 2 erfolgen. Die Übergabe- und Wickelposition 34 weist wiederum die Anpress- und Stützwalze 36 sowie die Anpress- und Laminierwalze 37 auf. Das Laminieren der Produkte erfolgt in gleicher Weise, wie dies für die Anlage 1 bzw. 1a beschrieben wurde.

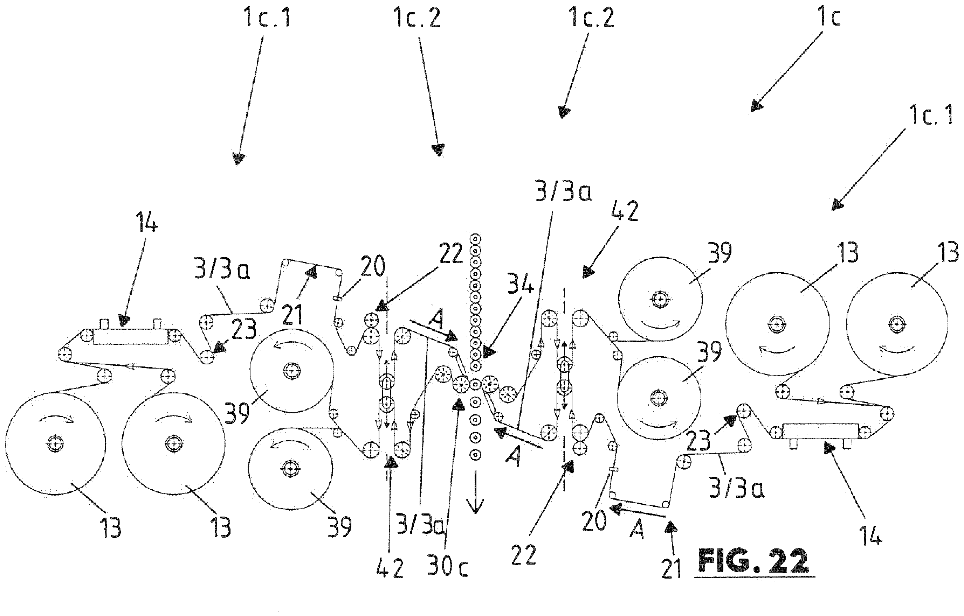

Die Figur 22 zeigt eine Anlage 1d, bei der die beiden Anlagenteile 1d.1 und 1d.2 jeweils zweifach vorgesehen sind, wobei die Anlagenteile 1d.1 wiederum dem Anlagenteil 1a.1 entsprechen. Die beiden Anlagenteile 1d.2 bilden eine gemeinsame Laminateinheit 30d. Mit der Übergabe- und Wickelposition 34, an der die Produkte 2 mittels des den Lineartransporteurs 46 getaktet vorbei bewegt werden und an der in jeder Stillstandsphase der getakteten Bewegung die Übergabe und das vollständige oder nahezu vollständige Anrollen der Einzellaminats 5.1 an die Produkte 2 erfolgen. An der Übergabe- und Wickelposition sind sich bezogen auf das dort angeordnete Produkte 2 diametral gegenüberliegende zwei Anpress- und Laminierwalzen 37 vorgesehen, die beide gegen das an der Übergabe- und Wickelposition 34 befindliche Produkt 2 angepresst anliegen. Mit jeder Anpress- und Laminierwalze erfolgt die Übergabe und Übertragung eines Einzellaminats 5.1 in der vorbeschriebenen Weise an das Produkt, beispielsweise auf eine Vorderseite und eine Rückseite dieses Produktes, z.B. gleichzeitig oder zeitlich versetzt oder zeitlich überlappend. Um dies zu ermöglichen, sind die Anlagenteile 1d.1 und 1d.2 auf der einen Seite des Lineartransporteurs 46 gegenüber den entsprechenden Anlagenteilen auf der anderen Seite des Lineartransporteurs 46 um eine Achse senkrecht zur Transportrichtung des Lineartransporteurs 46 um 180° gewendet vorgesehen.
Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehend davon ausgegangen, dass das Laminatmaterial 3 und 3a zwei Randstreifen 7 mit den Markierungen 8 aufweist. Selbstverständlich sind auch Ausführungen möglich, bei denen das Laminatmaterial lediglich einen Randstreifen 7 mit den Markierungen 8 besitzt und/oder entsprechende, zumindest den Vorschub des Laminatmaterials sowie den Antrieb der Stanzeinheit und der Laminiereinheit 30 bzw. der dortigen Walzen 36 und 37 steuernde, beispielsweise optisch abtastbare Markierungen auf dem jeweiligen Einzellaminat 5.1 und/oder auf den Zwischenlaminaten 43 vorhanden sind. Weiterhin besteht die Möglichkeit, dass bei dem Laminatmaterial auf die Randstreifen 7 völlig verzichtet ist, und zwar dann, wenn die Markierungen 8 an Randstreifen zur Steuerung der Laminiereinheit 30 und des Vorschubes des Laminatmaterials nicht erforderlich sind, sondern andere insbesondere auch optisch erfassbare Merkmale des Laminatmaterials selbst hierfür verwendet werden.

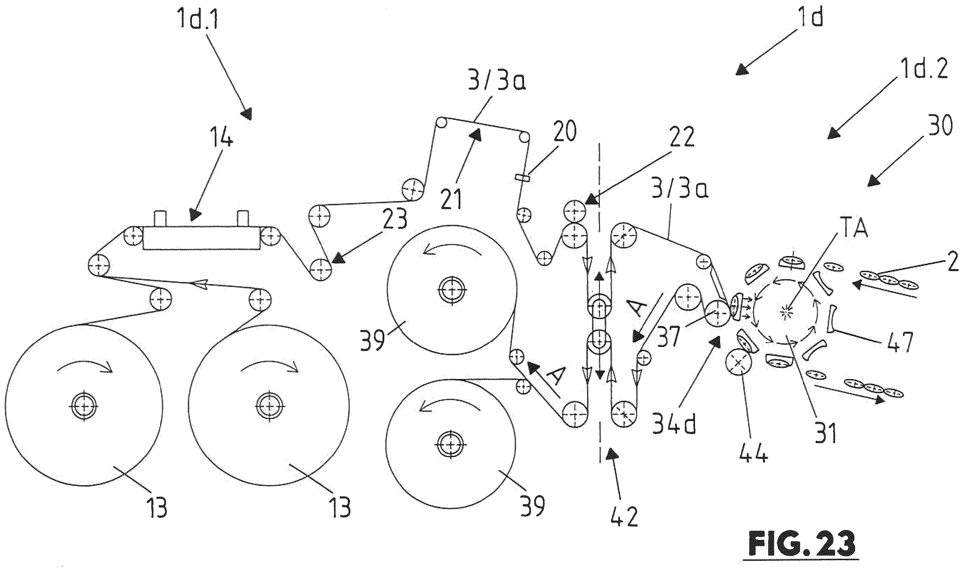

Die Figur 23 zeigt in einer Darstellung ähnlich Figur 18 eine Anlage 1d zum Aufbringen von Einzellaminaten 5.1 auf Produkte 2, beispielsweise auf Dosen oder Flaschen mit ovalem Querschnitt. Die Anlage 1d umfasst wiederum das dem Anlagenteil 1a.1 entsprechende Anlagenteil 1d.1 sowie das dem Anlagenteil 1a.2 entsprechende und das Anlagenteil 1d.2, dessen Laminiereinheit 30 an die ovalen Produkte 2 angepasst ist und hierfür an dem um die horizontale Achse umlaufend antreibbaren Träger 31 eine Vielzahl von Aufnahmen 47 zur Aufnahme jeweils eines Produkts 2 aufweist. Die über einen äußeren Transporteur zugeführten Produkte 2 gelangen jeweils einzeln an eine Aufnahme 47 und werden mit dem schrittweise angetriebenen Träger 31 an die Übergabe- und Laminierposition 34d bewegt. Ist jeweils ein Produkt 2 an diese Position gelangt, so erfolgt ein Zustellen der Walze 37, sodass der Anfangsbereich eines Einzellaminats 5.1 an das Produkt angedrückt wird. Im Anschluss daran bewegen sich die Walze 37 und die mit dem Einzellaminat 5.1 zu versehene Fläche des Produktes 2 synchron, und zwar durch eine entsprechende Schwenkbewegung sowie ggs. auch axiale Bewegung der Aufnahme 47. Auch hierbei ist es zweckmäßig, dass die Walze 37 mit dem Träger 31 und den Aufnahmen 47 zunächst eine kurze Rückbewegung und anschließend eine Vorwärtsbewegung ausführt, wie dies z.B. im Zusammenhang mit den Figuren 7 und 8 beschrieben wurde. Kurz bevor das rückwärtige Ende des jeweiligen Einzellaminats 5.1 gegen das Produkt 2 zur Anlage kommt, wird die Walze 37 vom Produkt wegbewegt, sodass der Rest des Einzellaminats von dem Trägermaterial 4 durch die weitere Dreh- oder Schwenkbewegung der Aufnahme 47 vom Laminatmaterial 3 bzw. 3a bzw. von dessen Trägermaterial 4 abgezogen wird. Im Anschluss daran wird durch Vorschubbewegung des Laminatmaterials 3 bzw. 3a das nächste Einzellaminat 5.1 an die Übergabeposition 34 bewegt, Gleichzeitig wird durch die getaktete Drehbewegung des Trägers 31 auch die nächste Aufnahme 47 mit dem in dieser angeordneten Produkt 2 an die Übergabeposition 34d bewegt. Der noch "lose Rest" jedes Einzellaminats wird mit der auf die Übergabeposition 34d folgenden Anpresswalze 44 an das Produkt angepresst. Die mit den Einzellaminaten 5.1 ausgestatteten Produkte 2 werden über einen äußeren Transporteur weggeführt.

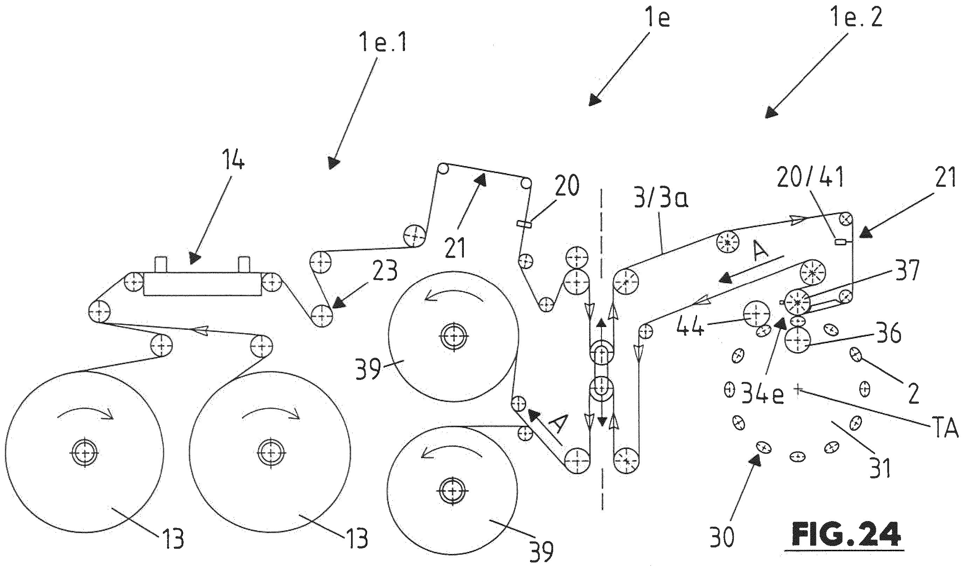

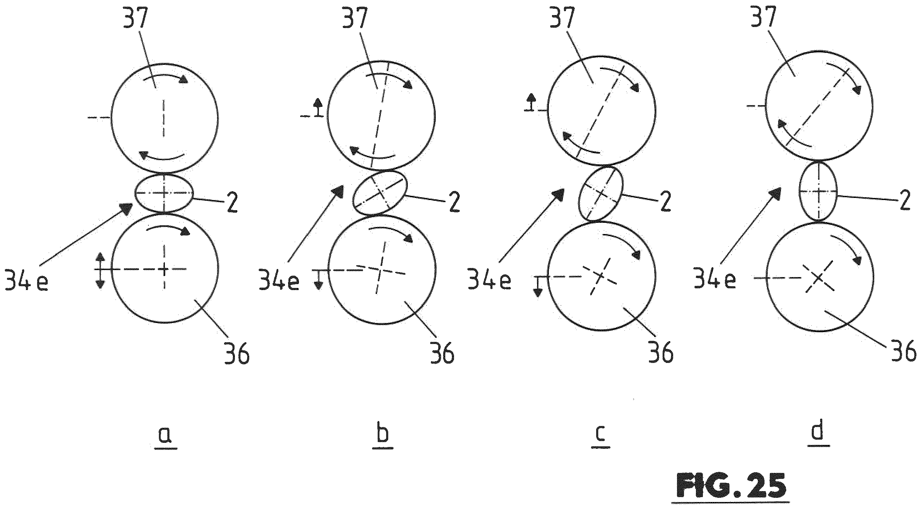

Die Figuren 24 und 25 zeigen als weitere Ausführungsform eine Anlage 1e, die zur Ausstattung (z.B. Rundum-Laminierung) von im Querschnitt ovalen Produkten 2 (z.B. Alu-Tuben) mit den Einzellaminaten 5.1 dient und die wiederum die beiden Anlageteile den Anlageteilen 1a.1 und 1a.2 entsprechenden Anlagenteile 1e.1 und 1e.2 aufweist und sich von der Anlage 1a lediglich durch die an die ovalen Produkte 2 angepasste Ausbildung der Laminiereinheit 30 unterscheidet. Letztere weist an dem Träger 31 die von Dornen 32 gebildeten Aufnahmen für die Produkte 2 auf. Die Dornen 32 sind mit ihren Außenquerschnitt an den Innenquerschnitt der Produkte 2 angepasst und um ihre Achsen drehbar. Das Aufbringen der Einzellaminate 5.1 auf die Mantelfläche der Produkte 2 erfolgt an der Übergabeposition 34e in gleicher Weise, wie dies vorstehend im Zusammenhang mit den Anlagen 1 und 1a beschrieben wurde, und zwar zwischen den beiden Walzen 36 und 37 durch Auf- bzw. Anwickeln des jeweiligen Einzellaminats 5.1 an das Produkt 2. Die Walzen 36 und 37 drehen hierbei nicht nur um ihre Walzenachse, sondern werden zugleich auch radial bewegt, und zwar unter Anpassung des Abstandes dieser Walzen an den Querschnitt, mit dem das ovale mit dem Dorn 32 um die Dornachse drehende Produkte 2 zwischen den beiden Walzen 36 und 37 jeweils wirkt.

Nach dem Verlassen der Übergabeposition 34e gelangt jedes auf einem Dorn 32 angeordnete und mit dem Einzellaminat 5.1 versehene Produkt 2 mit dem schrittweise bzw. getaktet angetriebenen Träger 31 in dem Bereich einer Anpresswalze 44, an der zumindest auch das nacheilende bzw. hintere Ende des jeweiligen Einzellaminats an das Produkt 2 angepresst wird.

Die Figur 25 zeigt in den Positionen a - d nochmals unterschiedliche Phasen beim Übergeben sowie beim An- oder Aufwickeln der Einzellaminate 5.1 an das an der Übergabeposition 34e angeordnete Produkt 2. Insbesondere zeigt die Figur 25 auch die Drehbewegung der beiden Walzen 36 und 37 sowie die gesteuerte, gegenläufige radiale Bewegung dieser Walzen in einer Achsrichtung radial zur Achse des Trägers 31 zur Anpassung des Walzenabstandes an den jeweiligen Querschnitt, den das Produkt 2 zwischen den beiden Walzen 36 und 37 ausbildet.

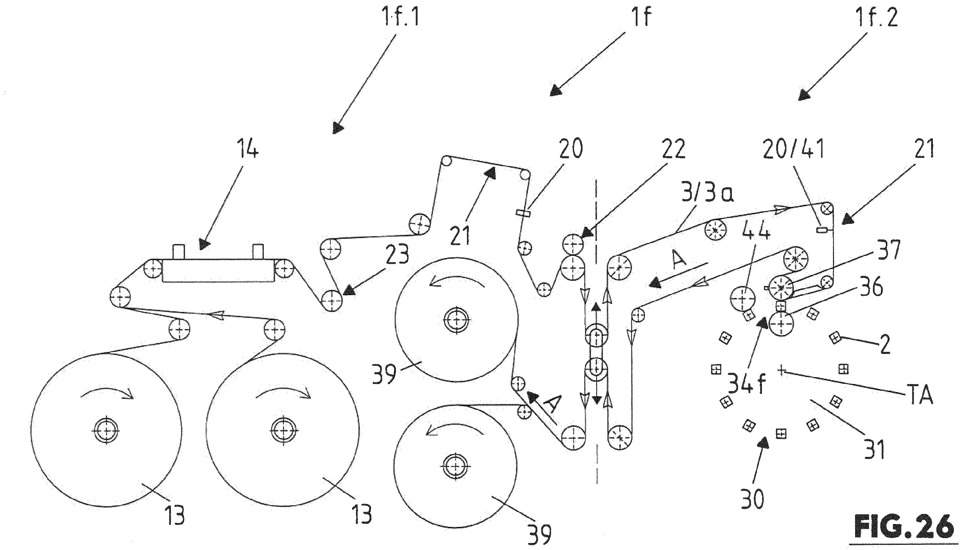

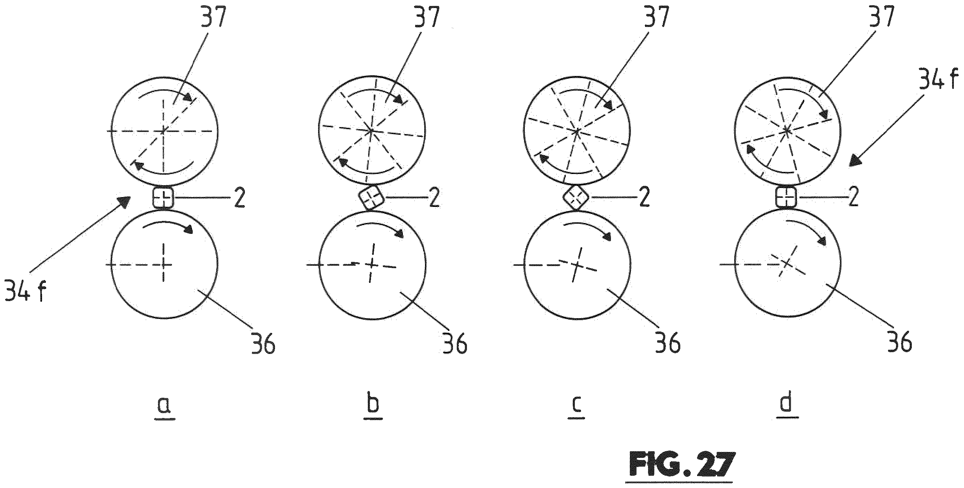

Die Figur 26 zeigt eine Anlage 1f, die wiederum das dem Anlagenteil 1a.1 entsprechende Anlagenteil 1f.1 zum Bereitstellen des Laminatmaterials 3 bzw. 3a sowie das dem Anlagenteil 1a.2 entsprechenden Anlagenteil 1f.2 mit der Laminiereinheit 30 aufweist. Die Laminiereinheit 30 ist wiederum zum Aufbringen der Einzellaminate 5.1 auf Produkte 2 (z.B. Dosen) ausgebildet, die einen von der Kreisform abweichenden Querschnitt aufweisen, und zwar bei der in den Figuren 26 und 27 wiedergegebenen Ausführungsform einen quadratischen Querschnitt. Die Laminiereinheit 30 besitzt den Träger 31, an welchem Produktaufnahmen bildende Dorne 32 vorgesehen sind, die an den Innenquerschnitt der Produkte 2 angepasst und um ihre Dornachse drehbar sind. Das Aufbringen bzw. Anwickeln der Einzellaminate 5.1 auf das jeweils an der Übergabeposition 34f befindliche Produkt 2 erfolgt in ähnlicher Weise, wie dies vorstehend für die Anlage 1e beschrieben wurde. Das jeweilige Einzellaminat 5.1 wird bei zugestellten Walzen 36 und 37 an eine Umfangsseite des Produktes übergeben. Bei rotierenden Walzen 36 und 37 und rotierendem Produkt 2 wird das Einzellaminat 5.1 unter zunehmenden Abziehen von dem Trägermaterial 4 auf das Produkt 2 durch Anwickeln übertragen, wobei die beiden Walzen 36 und 37 wiederum zusätzlich zu ihrer Drehbewegung auch gesteuert gegenläufig radial bewegbar sind, und zwar zur Anpassung des Walzenabstandes an den Querschnitt, den das Produkt 2 zwischen den Walzen 36 und 37 jeweils ausbildet. Die Positionen a - d zeigen im Detail verschiedenen Phase der Übergabe und des Anwickeln des jeweiligen Einzellaminates 5.1 an das Produkt 2. Nach dem Verlassen der Übergabeposition 34f gelangt das jeweilige Produkt 2 mit dem schrittweise weiterbewegten Träger 31 wiederum an die Anpresswalze 44, mit der zumindest das nacheilende Ende jedes Einzellaminats gegen das Produkt 2 angedrückt wird.

Vorstehend wurde davon ausgegangen, dass die Produkte 2 einen quadratischen Querschnitt aufweisen. Selbstverständlich können in gleicher oder ähnlicher Weise auch Produkte mit einem anderen, von der Kreisform abweichenden Querschnitt, beispielsweise mit einem dreieckförmigen, rechteckförmigen oder anderen polygonalen Querschnitt mit den Einzellaminaten 5.1 versehen werden.

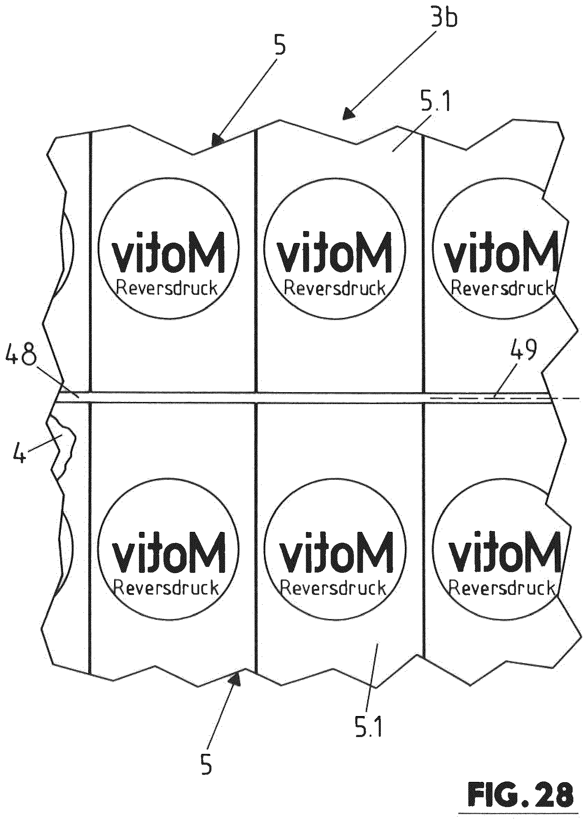

Die Figur 28 zeigt in einer Darstellung ähnlich Figur 2 eine Teillänge eines Laminatmaterials 3b, welches mehrbahnig ausgebildet ist, d.h. in Laminatmateriallängsrichtung zwei Reihen oder Folgen von Einzellaminaten 5.1 aufweist. Dieses Laminatmaterial besteht aus einem entsprechend breiten bahnförmigen Trägermaterial 4, auf dem die die Einzellaminate 5.1 bildende Folie 5 mit dem Trennlack oder Schälkleber gehalten ist. Aus diesem mehrbahnigen Laminatmaterial 3b werden für das Ausstatten der Produkte 2 bevorzugt mehrere einbahnige Laminatmaterialien gebildet, und zwar durch Ausstanzen und Ausziehen eines Folienstreifens 48 zwischen den Reihen der Einzellaminate 5.1 und durch anschließendes Trennen des Trägermaterials 4 entlang einer Trennlinie 49 zwischen den Reihen der Einzellaminate 5.1.

Die so erhaltenen einreihigen Laminatmaterialien werden dann beispielsweise zum Ausstatten von Produkten 2 parallel, bevorzugt in zwei Laminiereinheiten verarbeitet oder aber zu jeweils einem Laminatmaterialvorrat verarbeitet und aufgewickelt, von dem dann zu einem späteren Zeitpunkt das jeweils einbahnige Laminatmaterial beim Ausstatten der Produkte 2 mit den Einzellaminaten 5.1 abgezogen

Vorstehend wurde die Erfindung am Beispiel der Laminierung von Packmitteln 2, beispielsweise Tuben beschrieben. Die Erfindung eignet sich aber auch zum Laminieren von anderen Produkten, insbesondere von solchen mit kreiszylinderförmiger Mantelfläche, beispielsweise Stiften.

### Bezugszeichenliste

- 1, 1a - 1f: Anlage
- 1.1, 1a.1 - 1f.1: Anlagenteil
- 1.2, 1a.2 - 1f.2: Anlagenteil
- 2: Produkte, z.B. Packmittel oder Stift
- 3, 3a, 3b: Laminatmaterial
- 3.1: Ausgangangsmaterial
- 4: bahnförmiges Trägermaterial
- 5: Folie
- 5.1: Einzellaminat
- 5.1.1, 5.1.2: Ende des Einzellaminats
- 5.2: Aufdruck
- 6: Schicht aus Trennlack oder Schälkleber
- 7: Randstreifen
- 8: Markierung
- 9, 10: Trennlinie
- 11: Kleberauftrag
- 12: Folienstreifen
- 12.1: kleberfreier streifenförmiger Bereich
- 13: Vorratsspule für Ausgangsmaterial 3.1
- 14: Spleißvorrichtung
- 15: Station für Kleberauftrag
- 16: Station zum Trocken und Kühlen
- 17: Stanzeinheit
- 18: Station zum Abziehen der Folienstreifen 11
- 19: Wickelkörper
- 20: Sensor, auch Kantensensoren für die Kantensteuerung
- 21: Kantensteuerung
- 22: Mittel für den Bahntransport
- 23: Einrichtung zur Regulierung der Bahnspannung
- 30: Laminiereinheit
- 31: Träger
- 32: Dorn
- 33: Aufgabeposition
- 34, 34b - 34f: Übergabe- und Wickelposition
- 35: Abnahmeposition
- 36: Anpress- und Stützwalze
- 37: Anpress- und Laminierwalze
- 38: Überlaminierung
- 39: Wicklung oder aufgewickeltes Trägermaterial 4
- 40: Heizeinrichtung bzw. Heizplatte
- 41: Sensor
- 42: Vorschubausgleichseinheit
- 43: Zwischenlaminat
- 44: Anpresswalze
- 45: Transporteur
- 46: Lineartransporteur
- 47: Aufnahme
- 48: Folienstreifen
- 49: Trennlinie

- A: Transportrichtung des Ausgangsmaterials 3.1 und des Laminatmaterials 3,
- 3a:
- B: Drehrichtung des Trägers 31
- C, C': Drehrichtung der Anpress- und Stützwalze 36
- D, D': Drehrichtung der Anpress- und Laminierwalze 37
- E: Ebene
- H: radialer Hub der Walzen 36 und 37
- F: Transportrichtung
- LA, STA: Achse
- TA: Achse

## Patentansprüche

1. Laminatmaterial zum Ausstatten von Produkten (2), beispielsweise Packmitteln, durch Aufbringen von Einzellaminaten (5.1) aus einer dünnen Kunststofffolie (5) mit einer Dicke im Bereich zwischen 2 µm und 5 µm auf die Außenfläche der Produkte (2), mit einem bahnförmigen Trägermaterial (4), auf dem mittels eines Trennlacks oder Schälklebers (6) die Kunststofffolie (5) gehalten ist, aus der durch Stanzen und/oder Schneiden die Einzellaminate (5.1) gebildet sind, welche an ihrer dem Trägermaterial (4) abgewandten Seite mit einem Kleberauftrag (11) versehen sind und zumindest an ihren den Längsrändern des Trägermaterials (4) zugewandten Rändern einem kleberfreien Bereich (12.1) des Trägermaterials (4) benachbart sind, wobei der Kleberauftrag (11) von einem Heiß- oder Schmelzkleber gebildet ist.

2. Laminatmaterial nach Anspruch 1, **dadurch gekennzeichnet, dass** die Einzellaminate (5.1) in Längsrichtung des Trägermaterials (4) an jeweils einer Trennlinie (9) unmittelbar aneinander anschließen.

3. Laminatmaterial nach Anspruch 1, **dadurch gekennzeichnet, dass** die Einzellaminate (5.1) in Längsrichtung des Trägermaterials (4) über Zwischenlaminate (43) aneinander anschließen, die von den Einzellaminaten jeweils durch einer Trennlinie (9) getrennt sind.

4. Laminatmaterial nach Anspruch 3, **dadurch gekennzeichnet, dass** die Einzellaminate Gruppen von wenigstens zwei Einzellaminaten (5.1) bilden, dass die Einzellaminate (5.1) jeder Gruppe über die Trennlinie (9) unmittelbar aneinander anschließen, und dass zwischen den Gruppen der Einzellaminate (5.1) Zwischenlaminate (43) vorgesehen sind.

5. Laminatmaterial nach einem der vorhergehenden Ansprüche, **dadurch gekennzeichnet, dass** die Einzellaminate (5.1) wenigsten zwei, sich in Längsrichtung des Laminatmaterials (3b) erstreckende Reihen bilden.

6. Laminatmaterial nach einem der vorhergehenden Ansprüche, **dadurch gekennzeichnet, dass** die Kunststofffolie (5) hinterdruckt ist.

7. Laminatmaterial nach einem der vorhergehenden Ansprüche, **dadurch gekennzeichnet, dass** die Kunststofffolie (5) transparent ist.

## Claims

1. Laminate material for equipping products (2), for example packaging means, by applying single laminates (5.1), which are made from a thin plastics film (5) having a thickness ranging between 2 µm and 5 µm, onto the outer surface of the products (2), comprising a web-like support material (4), on which the plastics film (5) is retained by means of a release lacquer or a peeling adhesive (6), wherein the single laminates (5.1) are formed from said plastics film by stamping and/or cutting, wherein the single laminates on their side remote from the support material (4) are provided with an adhesive coating (11) and are adjacent to an adhesive-free region (12.1) of the support material (4) at least on their edges facing the longitudinal edges of the support material (4), wherein the adhesive coating (11) is formed by a hot glue or hot-melt adhesive.

2. Laminate material according to claim 1, **characterised in that** in a longitudinal direction of the support material (4) the single laminates (5.1) directly adjoin one another on a respective parting line (9).

3. Laminate material according to claim 1, **characterised in that** in the longitudinal direction of the support material (4) the single laminates (5.1) adjoin one another via intermediate laminates (43) which are separated from the single laminates in each case by a parting line (9).

4. Laminate material according to claim 3, **characterized in that** the single laminates form groups of at least two single laminates (5.1), **in that** the single laminates (5.1) of each group directly adjoin one another via the parting line (9), and **in that** intermediate laminates (43) are provided between the groups of single laminates (5.1).

5. Laminate material according to one of the preceding claims, **characterized in that** the single laminates (5.1) form at least two rows extending in the longitudinal direction of the laminate material (3b).

6. Laminate material according to one of the preceding claims, **characterized in that** the plastics film (5) is backprinted.

7. Laminate material according to one of the preceding claims, **characterised in that** the plastics film (5) is transparent.

## Revendications

1. Matière laminée, destinée à équiper des produits (2), par exemple des moyens d'emballage, par application de laminés individuels (5.1) en un film de matière plastique (5) fin, d'une épaisseur de l'ordre compris entre 2 µm et 5 µm sur la surface extérieure des produits (2), avec une matière de support (4) en forme de lé, sur laquelle au moyen d'un vernis de séparation ou d'une colle pelable (6) est maintenu le film de matière plastique (5), à partir duquel par estampage et/ou par coupe sont formés les laminés individuels (5.1) qui sur leur face opposée à la matière de support (4) sont munis d'une application d'agent adhésif (11) et au moins sur leurs bords dirigés vers les bords longitudinaux de la matière de support (4) sont voisins d'une zone exempte de colle (12.1) de la matière de support (4), dans lequel l'application d'agent adhésif (11) consistant dans un adhésif à chaud ou thermofusible.

2. Matière laminée selon la revendication 1, **caractérisée en ce que** dans la direction longitudinale de la matière de support (4), les laminés individuels (5.1) se raccordent directement les uns aux autres, sur chaque fois une ligne de séparation (9).

3. Matière laminée selon la revendication 1, **caractérisée en ce que** dans la direction longitudinale de la matière de support (4), les laminés individuels (5.1) se raccordent les uns aux autres par l'intermédiaire de laminés intermédiaires (43) qui sont chaque fois séparés des laminés individuels par une ligne de séparation (9).

4. Matière laminée selon la revendication 3, **caractérisée en ce que** les laminés individuels forment des groupes d'au moins deux laminés individuels (5.1), **en ce que** les laminés individuels (5.1) de chaque groupe se raccordent directement les uns aux autres par l'intermédiaire de la ligne de séparation (9) et **en ce qu'**entre les groupes de laminés individuels (5.1) sont prévus des laminés intermédiaires (43).

5. Matière laminée selon l'une quelconque des revendications précédentes, **caractérisée en ce que** les laminés individuels (5.1) forment au moins deux rangées s'étendant dans la direction longitudinale de la matière laminée (3b).

6. Matière laminée selon l'une quelconque des revendications précédentes, **caractérisée en ce que** le film de matière plastique (5) est rétro-imprimé.

7. Matière laminée selon l'une quelconque des revendications précédentes, **caractérisée en ce que** le film de matière plastique (5) est transparent.
